(19) Europäisches Patentamt / European Patent Office / Office européen des brevets

(11) **EP 3 263 452 B1**

(12) **FASCICULE DE BREVET EUROPEEN**

(45) Date de publication et mention
de la délivrance du brevet:
**26.09.2018 Bulletin 2018/39**

(51) Int Cl.:
***B64C 27/00*** *(2006.01)*

(21) Numéro de dépôt: **17177220.5**

(22) Date de dépôt: **21.06.2017**

(54) **AMELIORATION DE LA DETECTION ET DE SIGNALISATION DE L'APPROCHE DU DOMAINE DE VORTEX PAR UN GIRAVION**

VERBESSERUNG DER ERKENNUNG UND SIGNALISIERUNG DER ANNÄHERUNG AN DEN WIRBELBEREICH EINES DREHFLÜGELFLUGZEUGES

IMPROVING IN DETECTING THAT A ROTORCRAFT IS APPROACHING A VORTEX DOMAIN AND SIGNALING THAT DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2016 FR 1601020**

(43) Date de publication de la demande:
**03.01.2018 Bulletin 2018/01**

(73) Titulaire: **Airbus Helicopters**
**13725 Marignane Cedex (FR)**

(72) Inventeurs:
• **Certain, Nicolas**
**13090 Aix en Provence (FR)**
• **Pignier, Lionel**
**13127 Vitrolles (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
WO-A2-2004/101358    FR-A1- 2 921 635
FR-A1- 2 978 586    US-A1- 2011 295 568

**Description**

La présente invention est du domaine des aides au pilotage d'un giravion et en particulier pour les phases de vol proches du vol stationnaire ou à basse vitesse d'avancement en approche. La présente invention concerne un procédé et un dispositif de détection et de signalisation de l'approche du domaine de vortex par un giravion, notamment du type hélicoptère.

Plus particulièrement, ce procédé et ce dispositif de détection et de signalisation sont destinés à alerter le pilote d'un giravion que le giravion est proche, voire aborde un domaine de vol désigné généralement par la dénomination « état de vortex » par l'homme du métier.

Un giravion, aussi appelé « aéronef à voilure tournante », est équipé d'au moins un rotor principal d'axe sensiblement vertical assurant au moins la sustentation de l'appareil. Le rotor principal comporte des pales animées d'un mouvement de rotation. Dans le cas particulier de l'hélicoptère, le rotor principal, entraîné par au moins un moteur, assure à la fois la sustentation et la propulsion. En principe, un hélicoptère comprend aussi un rotor auxiliaire anticouple permettant le contrôle du mouvement en lacet du giravion.

Par suite, au moins un moteur fournit une puissance mécanique aux rotors principal et auxiliaire, ainsi qu'à des organes annexes par l'intermédiaire d'une boîte de transmission principale de puissance.

Dans ces conditions, un giravion exécute en principe trois sortes de vols, hors phases particulières de décollage et d'atterrissage et de virages :

- un vol vertical, ascendant ou descendant,
- un vol stationnaire, le giravion étant immobile, et
- un vol de translation, horizontal.

L'invention se rapporte aux vols de descente, principalement lors des phases d'approche en vue d'un atterrissage, ainsi qu'au vol proche d'un vol stationnaire.

En effet, lors d'un vol de descente, l'écoulement de l'air généré par le rotor principal diffère selon que la descente est rapide, modérée ou lente.

Les vols à descente rapide et modérée sont généralement des régimes « non motorisés ». La puissance nécessaire est fournie par le flux d'air et une roue libre intercalée dans l'ensemble de transmission de puissance mécanique permet au rotor principal de tourner librement.

A contrario, le vol à descente lente est un régime motorisé, le pilote provoquant et contrôlant la descente du giravion par une variation du pas collectif des pales du rotor principal.

L'invention concerne plus spécifiquement le vol à descente lente d'un giravion, par exemple à partir d'une position de vol stationnaire, cette descente pouvant se faire de façon verticale pure ou encore selon une forte pente de la trajectoire, c'est-à-dire avec une certaine vitesse horizontale désignée généralement « vitesse propre instantanée $V_P$ » du giravion. Cette vitesse propre instantanée $V_P$ reste dans un domaine de valeurs relativement faibles et est associée à une vitesse verticale instantanée.

Lors d'un vol à descente lente, un sillage se forme à la partie inférieure du rotor principal, ce qui oblige les filets d'air centraux inférieurs à se rabattre vers le bas et les filets d'air centraux supérieurs à créer une zone tourbillonnaire vers la périphérie des pales. L'écoulement aérodynamique est alors perturbé et des tourbillons périphériques risquent de se développer en isolant complètement le plan du rotor principal. Ce phénomène dangereux, désigné « état de vortex » entraîne une perte générale de sustentation et de maniabilité du giravion.

Dans ces conditions, quand un giravion en vol stationnaire se met à amorcer une descente verticale, l'inversion du sens des vitesses risque d'empêcher le flux d'air de traverser le rotor principal soit vers le haut, soit vers le bas. Les pales travaillent alors dans leur propre remous et l'air forme un anneau tourbillonnaire autour du rotor principal. Cet état de vortex se trouve à l'origine des vibrations dangereuses sur tous les giravions et risque d'amener des pertes de contrôle.

L'anneau tourbillonnaire se développe en général pour une vitesse verticale égale à environ la moitié de la vitesse induite moyenne en vol stationnaire hors effet de sol et avec une vitesse d'avancement faible ou sensiblement nulle. Une partie importante du rotor principal se trouve alors dans une zone de décrochage, les divers éléments de pale travaillant alors avec un angle d'incidence relativement élevé. Suite à une translation du giravion, le remous du rotor principal est rejeté vers l'arrière, de sorte que l'état de vortex ne se produit pas.

L'état de vortex est redouté car il isole le giravion de la masse d'air dans laquelle il évolue. Le variomètre peut alors atteindre des valeurs importantes non voulues. La sortie d'un état de vortex est assez longue. Les trois cas principaux de possibilité d'entrer dans un état de vortex sont :

- Le vol stationnaire avec une dérive non maîtrisée de la vitesse verticale,
- les phases d'approche en vue d'un atterrissage où la vitesse verticale d'entrée possible dans un état de vortex est affichée avec une réduction non maîtrisée de la vitesse d'avancement et/ou avec une remontée trop tardive du pas collectif des pales du rotor principal, donc de la puissance de vol, et

- les phases de ralentissement non maitrisées en vue d'un vol stationnaire, pour réaliser par exemple un treuillage ou dues à de mauvaises conditions météorologiques avec une remontée trop tardive du pas collectif des pales du rotor principal.

Dans la majorité des cas, l'entrée dans un état de vortex se fait à faible hauteur et, de fait, la vitesse verticale du giravion ainsi que le temps de sortie de cet état de vortex aboutissent généralement au crash du giravion. Un état de vortex est en quelque sorte équivalent au décrochage observé sur les avions.

On connait une situation de mise en vortex en « descente quasi-verticale ». L'homme du métier qualifie un tel domaine de vortex « statique », l'assiette du plan du rotor principal et l'assiette longitudinale du giravion étant considérées sensiblement nulles.

Si ce cas est bien réel, ce n'est pas pour autant le cas le plus répandu, car ne correspondant pas à une utilisation classique d'un giravion.

L'homme du métier définit également un domaine de vortex « dynamique » correspondant à la présence d'une forte décélération d'avancement du giravion. Ce domaine de vortex dynamique est caractérisé par un angle $\theta$ de l'assiette du plan du rotor principal par rapport à un plan normal à la direction de la pesanteur, donc lié à un repère terrestre, par exemple de l'ordre de 20°, voire davantage. Cette inclinaison du plan du rotor principal est consécutive à l'action d'un pilote du giravion sur le manche cyclique commandant le pas cyclique longitudinal des pales du rotor principal et s'accompagne d'une variation de l'assiette longitudinale $\theta$ du giravion qui suit sensiblement l'inclinaison de ce plan du rotor principal.

Ce domaine de vortex dynamique est tout aussi dangereux que le domaine de vortex statique et peut se produire par exemple lors d'un atterrissage avec une vitesse verticale de descente et une forte décélération horizontale, cette situation pouvant être éventuellement aggravée par un léger vent arrière.

De la sorte, un domaine de vortex statique est défini essentiellement par un seul état de vortex tel que l'assiette du plan du rotor principal est sensiblement nulle. Par contre, il peut exister une pluralité d'états de vortex dynamique. Chaque état de vortex dynamique correspond à une assiette donnée du plan du rotor principal.

Un domaine de vortex est donc dangereux, mais peut être abandonné par le pilote, en amorçant une translation par modification du pas cyclique des pales du rotor principal. La sortie préconisée par quelques ouvrages en augmentant la vitesse verticale du giravion vers le bas, par diminution du pas collectif des pales du rotor principal, afin que le rotor principal s'échappe de son propre sillage, est réellement possible mais n'est pas réaliste dans les cas opérationnels où la hauteur du giravion par rapport au sol est faible lors de l'apparition de l'état de vortex.

La sortie de l'état de vortex préconisée opérationnellement est donc d'augmenter le pas cyclique longitudinal vers l'avant.

Afin d'anticiper le risque que le giravion n'entre dans un domaine de vortex, des procédés et des systèmes d'alerte existent afin de prévenir le pilote d'un giravion qu'il évolue proche d'un domaine de vortex ou bien dans un tel domaine.

Par exemple, le document EP 1950718 décrit un tel système et une telle méthode déclenchant une alerte lorsque d'une part la vitesse du vent arrière subi par le giravion est supérieure à un premier seuil déterminé en fonction de la hauteur du giravion par rapport au sol et d'autre part la vitesse de descente du giravion est supérieure à un second seuil prédéfini. En outre, des conditions d'inhibition évitent d'émettre une alerte lorsque le giravion évolue avec un taux de changement de cap ou bien un taux de changement de vitesse d'avancement important. Par contre, ce système et cette méthode fonctionnent uniquement lorsque le giravion évolue en condition de vent arrière.

On connait également le document FR 2921635 qui décrit un procédé et un dispositif permettant de détecter l'entrée d'un giravion dans un domaine de vortex ou encore, de façon prédictive, l'approche du giravion dans un tel domaine de vortex. Cette détection de façon prédictive est effectuée en fonction d'une vitesse propre prédictive et d'une vitesse verticale prédictive du giravion déterminées en temps réel et éventuellement corrigées.

Par ailleurs, le document EP 2513732 décrit un système et une méthode permettant de détecter si un aéronef est proche ou bien dans une situation de décrochage aérodynamique, puis d'engager une procédure automatique pour éviter de rentrer dans une situation dangereuse ou bien d'en sortir. La détection d'une telle situation est réalisée en comparant une erreur de vitesse verticale entre la vitesse verticale courante et la vitesse verticale commandée à un seuil d'erreur et en vérifiant sa polarité. L'accélération verticale et la vitesse d'avancement de l'aéronef peuvent également être comparées respectivement à un seuil pour vérifier si l'aéronef est sorti de la situation de décrochage.

De plus, le document US 2011/0295568 décrit une méthode pour déterminer des changements de géométrie de l'état de vortex causés par les pales du rotor principal de l'aéronef selon la vitesse verticale induite de ce rotor principal et la distribution de portance des pales de ce rotor principal.

On connaît aussi le document FR 2978586 qui décrit un procédé et un dispositif d'aide au pilotage destiné à un aéronef hybride muni d'un rotor principal et d'au moins une hélice propulsive. Ce procédé permet de définir une pente minimale que peut suivre l'aéronef en descente en fonction d'une marge de poussée de chaque hélice propulsive. Cette pente minimale peut notamment être utilisée afin d'éviter l'entrée de l'aéronef hybride dans un domaine de vortex.

Enfin, le document WO 2004/101358 décrit un système de commande de vol pour giravion permettant d'éviter l'apparition d'un état de vortex. Ce système de commande de vol agit sur les pas collective et/ou cyclique des pales de chaque rotor principal, par exemple de façon oscillatoire, afin de générer des perturbations sur ses pales évitant ainsi l'apparition de l'état de vortex.

La présente invention a pour objet un procédé et un dispositif permettant de détecter l'approche du giravion d'un domaine de vortex et d'alerter le pilote de cette détection tout en s'affranchissant des limitations mentionnées ci-dessus. Le système et le dispositif selon l'invention fonctionnent notamment quelles que soient les conditions de vent dans lesquelles évolue le giravion. En outre, le système et le dispositif selon l'invention permettent également de détecter l'entrée d'un giravion dans un domaine théorique de vortex.

La présente invention permet une telle détection en phase de décélération du giravion, notamment en cas de vol de descente motorisé ainsi qu'à proximité d'un vol stationnaire et améliore cette détection en particulier lors des faibles vitesses d'avancement du giravion. La présente invention peut ainsi constituer un perfectionnement du procédé et du dispositif de détection décrits dans le document FR 2921635.

Le procédé de détection et de signalisation de l'approche d'un domaine de vortex par un giravion selon l'invention est destiné à un giravion appartenant à une famille de giravions et comportant un rotor principal muni de pales. De tels giravions sont classiquement classés par familles en fonction en particulier de leurs masses et des dimensions de leurs rotors principaux. Ce procédé comporte les étapes suivantes :

a) une étape préliminaire de détermination d'un seuil de vitesse d'avancement limite et d'un seuil de vitesse verticale limite définissant une limite d'entrée dans un domaine de vortex pour cette famille de giravions,

b) une étape de calcul en temps réel d'une vitesse d'avancement prédictive $V_{AP}$ et d'une vitesse verticale prédictive $V_{ZP}$ du giravion lors d'un vol du giravion,

- la vitesse d'avancement prédictive $V_{AP}$ étant calculée en fonction d'une vitesse d'avancement instantanée $V_A$

et d'une accélération d'avancement instantanée $\dfrac{dV_A}{dt}$ du giravion sur un intervalle de temps de prédiction $\varDelta t$

caractérisant le temps de prédiction de la vitesse d'avancement prédictive $V_{AP}$ et de la vitesse verticale prédictive $V_{ZP}$,

- la vitesse verticale prédictive $V_{ZP}$ étant calculée sous condition de la vitesse d'avancement instantanée $V_A$, de sorte que :

• lorsque la vitesse d'avancement instantanée $V_A$ est supérieure à une vitesse limite supérieure, la vitesse verticale prédictive $V_{ZP}$ est calculée en fonction d'une vitesse verticale instantanée $V_Z$ du giravion, du bilan énergétique du giravion et de la variation de la puissance nécessaire du rotor principal pour un vol en palier sur l'intervalle de temps de prédiction $\varDelta t$,

• lorsque la vitesse d'avancement instantanée $V_A$ est inférieure à une vitesse limite inférieure, la vitesse verticale prédictive $V_{ZP}$ est calculée en fonction de la vitesse verticale instantanée $V_Z$ et d'une accélération

verticale instantanée $\dfrac{dV_Z}{dt}$ du giravion,

c) une étape de déclenchement d'une alarme d'approche d'un domaine de vortex par le giravion, la vitesse d'avancement prédictive $V_{AP}$ et la vitesse verticale prédictive $V_{ZP}$ étant comparées respectivement avec le seuil de vitesse d'avancement limite et le seuil de vitesse verticale limite, l'alarme étant alors déclenchée lorsque d'une part la vitesse d'avancement prédictive $V_{AP}$ a atteint le seuil de vitesse d'avancement limite et d'autre part la vitesse verticale prédictive $V_{ZP}$ a atteint le seuil de vitesse verticale limite, et

d) une étape de signalisation de l'alarme à un pilote du giravion suite au déclenchement de l'alarme.

Un giravion est caractérisé par trois directions privilégiées, une direction longitudinale X s'étendant de l'arrière du giravion vers l'avant du giravion, une direction d'élévation Z s'étendant de bas en haut perpendiculairement à la direction longitudinale X et une direction transversale Y s'étendant de droite à gauche perpendiculairement aux directions longitudinale X et d'élévation Z.

Au cours de l'étape préliminaire, des séries de mesures préalables sont réalisées sur un giravion de référence de la famille du giravion concerné lors de vols d'essais préliminaires. Une pluralité de couples de valeurs relatives aux composantes tangentielle et normale de la vitesse de l'écoulement d'air par rapport au plan du rotor principal de ce giravion de référence sont mesurées. Ces couples de valeurs permettent de déterminer un domaine de vortex instantané représentatif de l'état de vortex par un diagramme où les abscisses et les ordonnées correspondent respectivement auxdites composantes tangentielle et normale.

Alors, un diagramme représentant un vortex statique pour le giravion de référence et, par suite, pour la famille de giravions dont fait partie ce giravion de référence est défini.

Les composantes tangentielle et normale de la vitesse de l'écoulement d'air par rapport au plan du rotor principal de ce giravion de référence sont de préférence la vitesse d'avancement instantanée $V_A$ et la vitesse verticale instantanée $V_Z$ de ce giravion de référence.

Ensuite, un seuil de vitesse d'avancement limite et un seuil de vitesse verticale limite sont déterminés afin de définir une limite d'entrée dans un domaine de vortex statique pour ce giravion de référence. Ces seuils de vitesse d'avancement limite et de vitesse verticale limite sont déterminés à partir du diagramme représentant un vortex statique pour la famille de giravions déterminé lors de l'étape préliminaire. Ce seuil de vitesse d'avancement limite et ce seuil de vitesse verticale limite peuvent être généralisés pour tous les giravions appartenant à la famille de giravions de ce giravion de référence. Ces seuils de vitesse d'avancement limite et de vitesse verticale limite sont par exemple stockés dans un moyen de mémorisation que comporte le giravion.

L'étape de calcul en temps réel d'une vitesse d'avancement prédictive $V_{AP}$ et d'une vitesse verticale prédictive $V_{ZP}$ du giravion lors d'un vol du giravion peut comporter des sous-étapes afin de décomposer ces calculs, ce giravion appartenant à la famille de giravions du giravion de référence utilisé lors de l'étape préliminaire.

Cette étape de calcul comporte tout d'abord une sous-étape de détermination de la vitesse d'avancement instantanée $V_A$ et de la vitesse verticale instantanée $V_Z$ du giravion. Ces déterminations sont effectuées en temps réel, par exemple à chaque instant ou bien à intervalles de temps régulier.

La détermination de la vitesse verticale instantanée $V_Z$ du giravion est effectuée directement par l'intermédiaire d'un premier moyen de mesure de vitesse qui peut être par exemple un variomètre, un système de localisation par satellites tel que le « GPS » signifiant en langue anglaise « Global Positionning System » ou bien par une centrale inertielle.

La détermination de la vitesse d'avancement instantanée $V_A$ du giravion est effectuée à partir d'une mesure de vitesse effectuée par l'intermédiaire d'un deuxième moyen de mesure de vitesse qui peut être par exemple un anémomètre. Un anémomètre fournit une vitesse du giravion par rapport à l'air, appelée « vitesse conventionnelle $Vc$ » ou « vitesse lue » ou encore « vitesse indiquée ».

En outre, l'anémomètre est un instrument barométrique dont la mesure peut être corrigée barométriquement de façon connue en fonction de la densité relative de l'air $\sigma$, à savoir le quotient de la masse volumique $\rho$ de l'air à l'altitude du giravion par la masse volumique $\rho_0$ de l'air au sol en atmosphère standard. En conséquence, la vitesse d'avancement instantanée $V_A$ du giravion par rapport à l'air correspond de préférence à la vitesse conventionnelle $Vc$ corrigée barométriquement par la relation $V_C = V_A . \sqrt{\sigma}$. Cette vitesse conventionnelle $Vc$ corrigée barométriquement est dite « vitesse propre » instantanée $V_P$ du giravion ou encore « vitesse vraie ».

La vitesse d'avancement prédictive $V_{AP}$ du giravion constitue alors une vitesse prédictive du giravion par rapport à l'air corrigée barométriquement qui peut également être désignée « vitesse propre prédictive $V_{PP}$ » du giravion.

En outre, dans le cadre de l'invention, la vitesse d'avancement instantanée $V_A$ peut être approximée par la vitesse conventionnelle $V_C$ qui est alors non corrigée.

De même, la vitesse d'avancement instantanée $V_A$ peut également être approximée par la composante horizontale de la vitesse propre instantanée $V_P$ du giravion. Cette composante horizontale est une projection de la vitesse propre instantanée $V_P$ sur un plan horizontal perpendiculaire à la direction de la pesanteur. La vitesse d'avancement prédictive $V_{AP}$ du giravion constitue alors une composante horizontale de la vitesse propre prédictive $V_{PP}$.

Ces approximations de la vitesse d'avancement $V_A$ sont possibles car le procédé selon l'invention permet de détecter une approche d'un domaine de vortex sur un intervalle de temps de prédiction $\Delta t$ et en raison du caractère prédictif des vitesses d'avancement et verticale prédictive $V_{AP}$ et $V_{ZP}$ du giravion.

Une telle approximation de la vitesse d'avancement $V_A$ va en fait entrainer une approximation sur l'intervalle de temps de prédiction $\Delta t$, mais n'entrainera pas de cas de non détection de l'approche d'un domaine de vortex.

De préférence, l'anémomètre est bidirectionnel ou bien multidirectionnel et fournit des mesures de la vitesse du giravion par rapport à l'air qui sont précises y compris pour de faibles vitesses et jusqu'à des valeurs nulles. On connait par exemple les anémomètres optiques, tels que les anémomètres LIDAR (d'après l'expression en langue anglaise « LIght Détection and Ranging »), qui permettent de mesurer la vitesse air d'un giravion par émission/réception séquentielle à fréquence donnée d'un faisceau lumineux LASER (d'après l'expression en langue anglaise « Light Amplification by Stimulated Emission of Radiation »). Il existe également les anémomètres ultrasoniques qui permettent de mesurer la vitesse d'un giravion par rapport à l'air par émission/réception d'ondes ultrasoniques.

Pour ces anémomètres, la vitesse du giravion par rapport à l'air mesurée peut comporter une composante longitudinale et une composante transversale selon les directions longitudinale X et transversale Y du giravion.

En outre, un anémomètre peut être monodirectionnel et fournir des mesures de la vitesse d'avancement du giravion par rapport à l'air selon la seule direction longitudinale X du giravion.

La vitesse d'avancement prédictive $V_{AP}$ et la vitesse verticale prédictive $V_{ZP}$ du giravion sont ensuite calculées en temps réel lors d'un vol du giravion. Ces vitesses d'avancement prédictive $V_{AP}$ et verticale prédictive $V_{ZP}$ sont des évaluations des vitesses d'avancement $V_A$ et verticale $V_Z$ que le giravion va atteindre à l'issue de l'intervalle de temps de prédiction $\Delta t$. Cet intervalle de temps de prédiction $\Delta t$ est par exemple de 10 secondes (10s). Ces vitesses d'avancement prédictive $V_{AP}$ et verticale prédictive $V_{ZP}$ sont par exemple stockées dans un moyen de mémorisation que comporte le giravion.

La vitesse d'avancement prédictive $V_{AP}$ peut être calculée au cours d'une première sous-étape de calcul en fonction de la vitesse d'avancement instantanée $V_A$ et d'une accélération d'avancement instantanée $\dfrac{dV_A}{dt}$ du giravion sur l'intervalle de temps de prédiction $\Delta t$.

La vitesse d'avancement prédictive $V_{AP}$ est de préférence calculée par une première relation :

$$V_{AP} = V_A + \Delta t . \frac{dV_A}{dt} ,$$

où $t$ et $\Delta t$ désignent respectivement le temps et l'intervalle de temps de prédiction.

La vitesse verticale prédictive $V_{ZP}$ peut être calculée au cours d'une deuxième sous-étape de calcul sous condition de la vitesse d'avancement instantanée $V_A$, définissant trois cas.

Dans un premier cas, lorsque la vitesse d'avancement instantanée $V_A$ est supérieure à une vitesse limite supérieure, la vitesse verticale prédictive $V_{ZP}$ est calculée en fonction d'une vitesse verticale instantanée $V_Z$ du giravion, du bilan énergétique du giravion et de la variation de la puissance en palier du rotor principal sur l'intervalle de temps de prédiction $\Delta t$.

On entend par « bilan énergétique » du giravion l'application d'équation(s) ou de loi(s) permettant de caractériser l'énergie emmagasinée et/ou consommée par le giravion pendant son vol, par exemple l'application du principe de conservation de l'énergie pendant ce vol du giravion.

La vitesse verticale prédictive $V_{ZP}$ est ainsi calculée par une deuxième relation :

$$V_{ZP} = V_Z + A . \left| V_A . \frac{dV_A}{dt} \right| + B . ( V_Z + k ) . \frac{V_{AP} - V_A}{2 . V_Y - V_{AP}} ,$$

$k$ étant une constante caractéristique de la famille de giravions du giravion, $A$ étant un premier coefficient pondérateur, $B$ étant un deuxième coefficient pondérateur et $V_Y$ étant une vitesse prédéterminée de puissance minimale de la famille de giravions. Le deuxième coefficient pondérateur $B$ peut être fonction de la vitesse prédéterminée de puissance minimale $V_Y$ et est de préférence inférieur ou égal à 1.

Ce deuxième coefficient pondérateur $B$ est déterminé par des essais relatifs à chaque famille de giravions. Ce deuxième coefficient pondérateur $B$ est généralement proche de l'unité. Toutefois, la spécificité de chaque giravion peut générer un léger écart par rapport à cette valeur générale, cet écart étant déterminé suite aux essais.

La constante caractéristique $k$ a été définie notamment dans les documents FR 2921635 et FR 2921728. Cette constante caractéristique $k$ est déterminée grâce à des essais, par exemple sur un giravion de référence de la famille de giravions, et à partir d'une approximation linéaire qui correspond à un rapport de proportionnalité entre les puissances du giravion et sa vitesse verticale instantanée $V_Z$, indépendamment de la masse du giravion, tel que : $V_Z = k . ( \dfrac{W}{W_n} - 1 )$

avec l'approximation $\dfrac{W_n}{Wv_Y} = 2 - \dfrac{V_A}{V_Y}$, $W_{V_Y}$ et $W_n$ étant les puissances nécessaires pour que le giravion vole en palier respectivement à la vitesse de puissance minimale $V_Y$ et à la vitesse d'avancement instantanée $V_A$, $W$ étant la puissance disponible instantanée du giravion.

Par suite, l'application du principe de conservation de l'énergie pendant une décélération du giravion jusqu'au vol stationnaire est défini par l'expression :

$$m.V_A \frac{dV_A}{dt} + m.g.\frac{dh}{dt} + W_n + W_{mot} = 0,$$

$m$, $h$ et $g$ désignant respectivement la masse du giravion, sa hauteur de vol par rapport au sol et l'accélération de la pesanteur, $W_n$ et $W_{mot}$ étant respectivement la puissance de vol nécessaire en palier du giravion à la vitesse d'avancement instantanée $V_A$ et la puissance fournie par la motorisation du giravion.

On peut alors en déduire la deuxième relation comme décrit dans les documents FR 2921635 et FR 2921728.

Notamment, le premier coefficient pondérateur A est proportionnel au rapport $\frac{1}{g}$ et de préférence inférieur à 0.1. La valeur de ce premier coefficient pondérateur $A$ peut être affinée lors des essais préliminaires. Ces coefficients pondérateurs $A$ et $B$ sont constants pour une famille de giravion.

Toutefois, cette deuxième relation diffère de celle citée dans les documents FR 2921635 et FR 2921728 par l'utilisation de la fonction valeur absolue appliquée à l'expression $\left| V_A . \frac{dV_A}{dt} \right|$, le premier coefficient pondérateur $A$ étant par ailleurs négatif. Cette utilisation de la fonction valeur absolue permet avantageusement de déterminer une vitesse verticale prédictive $V_{ZP}$ aussi bien lorsque le giravion est en phase de décélération ou bien d'accélération, le premier coefficient pondérateur $A$ étant négatif. Cela permet d'anticiper une diminution de vitesse verticale $V_Z$ lors d'une accélération d'avancement du giravion.

Par ailleurs, l'expression $B.(V_Z + k).\frac{V_{PP} - V_P}{2.V_Y - V_{PP}}$, qui représente la variation de la puissance en palier du rotor principal sur l'intervalle de temps de prédiction $\Delta t$, n'est applicable pour calculer la vitesse verticale prédictive $V_{ZP}$ uniquement lorsque le giravion vole d'une part avec une faible vitesse d'avancement instantanée $V_A$ inférieure à la vitesse prédéterminée de puissance minimale $V_Y$ de la famille du giravion mais toujours supérieure à la vitesse limite supérieure, et d'autre part avec une vitesse d'avancement instantanée $V_A$ décroissante caractérisant une décélération du giravion.

Dans un deuxième cas, lorsque la vitesse d'avancement instantanée $V_A$ est inférieure à une vitesse limite inférieure, la vitesse verticale prédictive $V_{ZP}$ est calculée en fonction de la vitesse verticale instantanée $V_Z$ et d'une accélération verticale instantanée $\frac{dV_Z}{dt}$ du giravion. La vitesse verticale prédictive $V_{ZP}$ est de préférence calculée par une troisième relation $V_{ZP} = V_Z + D.\Delta t.\frac{dV_Z}{dt}$, $D$ étant un troisième coefficient pondérateur. Le troisième coefficient pondérateur $D$ est inférieur ou égal à 1. Ce troisième coefficient pondérateur $D$ est déterminé par des essais relatifs à chaque famille de giravions.

Dans un troisième cas, lorsque la vitesse d'avancement instantanée $V_A$ est inférieure ou égale à la vitesse limite supérieure et est supérieure ou égale à la vitesse limite inférieure, deux alternatives sont possibles.

Selon une première alternative, la vitesse verticale prédictive $V_{ZP}$ est une interpolation, par exemple linéaire, entre les deux cas précédents, à savoir entre la deuxième et la troisième relations.

Selon une seconde alternative, la vitesse verticale prédictive $V_{ZP}$ est calculée selon une logique à hystérésis.

Ainsi, lorsque la vitesse d'avancement instantanée $V_A$ décroît à partir de la vitesse limite supérieure et reste supérieure ou égale à la vitesse limite inférieure, la vitesse verticale prédictive $V_{ZP}$ est calculée selon le premier cas, à savoir en fonction de la vitesse verticale instantanée $V_Z$, du bilan énergétique du giravion et de la variation de la puissance nécessaire du rotor principal pour un vol en palier sur l'intervalle de temps de prédiction $\Delta t$. La deuxième relation peut être appliquée.

A contrario, lorsque la vitesse d'avancement instantanée $V_A$ augmente à partir de la vitesse limite inférieure et reste inférieure ou égale la vitesse limite supérieure, la vitesse verticale prédictive $V_{ZP}$ est calculée selon le deuxième cas, à savoir en fonction de la vitesse verticale instantanée $V_Z$ et d'une accélération verticale instantanée $\frac{dV_Z}{dt}$ du giravion. La troisième relation peut être appliquée.

L'accélération d'avancement instantanée $\frac{dV_A}{dt}$ et l'accélération verticale instantanée $\frac{dV_Z}{dt}$ du giravion peuvent être mesurées directement et respectivement par un moyen de mesure dédié pour chaque type d'accélération. Ces accélérations peuvent également être déterminées respectivement par une dérivation temporelle de la vitesse d'avancement instantanée $V_A$ et de la vitesse verticale prédictive $V_{ZP}$.

Par exemple, pour une famille de giravions correspondant à une masse comprise entre quatre et six tonnes, la constante caractéristique k est égal à 4000 pieds par minute (4000 ft/mn), le premier coefficient pondérateur A est égal à -0.05, le deuxième coefficient pondérateur B est égal à 1 lorsque la vitesse d'avancement $V_A$ est inférieure ou égale à la vitesse prédéterminée de puissance minimale $V_Y$ et nulle lorsque la vitesse d'avancement $V_A$ est supérieure à la vitesse prédéterminée de puissance minimale $V_Y$. On rappelle qu'un pied est égal 0.3048 mètre.

Le troisième coefficient pondérateur D est quant à lui égal à 0.5. La vitesse prédéterminée de puissance minimale $V_Y$ est par exemple voisine de 65 noeuds (65 kt) pour cette famille de giravions. On rappelle qu'une vitesse de 1 noeud est une vitesse de 1 mille nautique par heure, 1 mille nautique étant égal 1852 mètres. Enfin, la vitesse limite inférieure est égale à 15 kt et la vitesse limite supérieure est égale à 35 kt, par exemple. Cette vitesse limite inférieure égale à 15 kt correspond dans ce cas à la limite d'entrée en vol stationnaire, la vitesse limite supérieure égale à 35 kt étant utilisée pour introduire une interpolation par lissage ou bien un cycle à hystérésis.

Puis, lors de l'étape de déclenchement d'une alarme, la vitesse d'avancement prédictive $V_{AP}$ et la vitesse verticale prédictive $V_{ZP}$ sont tout d'abord comparées avec respectivement les seuils de vitesse d'avancement limite et de vitesse verticale limite.

Selon une première variante de l'invention, le seuil de vitesse d'avancement limite et le seuil de vitesse verticale limite sont des seuils simples constitués respectivement par une vitesse d'avancement limite et par une vitesse verticale limite. Ces seuils de vitesse d'avancement limite et de vitesse verticale limite sont donc constants.

De préférence, la vitesse verticale limite correspond sensiblement à la moitié d'une valeur moyenne de la vitesse induite des filets d'air par l'action du rotor principal du giravion, lorsque le giravion évolue en vol stationnaire hors effet de sol. En effet, cette vitesse induite est fonction de la masse du giravion et de la densité de l'air. De fait, prendre une valeur moyenne de cette vitesse induite permet de couvrir l'ensemble des conditions de vols ainsi que des giravions de la famille de giravions.

La vitesse d'avancement limite est par exemple égale à 25 kt et la vitesse verticale limite est égale à -1200 ft/mn pour la famille de giravions correspondant à une masse comprise entre quatre et six tonnes.

L'alarme est alors déclenchée lorsque d'une part la vitesse d'avancement prédictive $V_{AP}$ est inférieure ou égale à la vitesse d'avancement limite et d'autre part la vitesse verticale prédictive $V_{ZP}$ est inférieure ou égale à la vitesse verticale limite. L'alarme est désactivée dès que la vitesse d'avancement prédictive $V_{AP}$ est supérieure à la vitesse d'avancement limite ou bien dès que la vitesse verticale prédictive $V_{ZP}$ est supérieure à la vitesse verticale limite.

Selon une deuxième variante de l'invention, le seuil de vitesse d'avancement est un premier seuil à hystérésis constitué par une première vitesse d'avancement limite et une seconde vitesse d'avancement limite. Le seuil de vitesse verticale limite est un second seuil à hystérésis constitué par une première vitesse verticale limite et une seconde vitesse verticale limite. La première vitesse d'avancement limite est inférieure à la seconde vitesse d'avancement limite et la première vitesse verticale limite est inférieure à la seconde vitesse verticale limite. La première vitesse verticale limite peut correspondre sensiblement à la moitié d'une valeur moyenne de la vitesse induite des filets d'air par l'action du rotor principal du giravion lorsque le giravion évolue en vol stationnaire hors effet de sol. Toutefois, il est possible que ce soit la seconde vitesse verticale limite qui corresponde sensiblement à la moitié d'une valeur moyenne de cette vitesse induite. Par exemple, la première vitesse d'avancement limite est égale à 21 kt, la seconde vitesse d'avancement limite est égale à 26 kt, la première vitesse verticale limite est égale à -1200 ft/mn et la seconde vitesse verticale limite est égale à -800 ft/mn.

L'alarme est alors déclenchée lorsque d'une part la vitesse d'avancement prédictive $V_{AP}$ est inférieure ou égale à la première vitesse d'avancement limite et d'autre part la vitesse verticale prédictive $V_{ZP}$ est inférieure ou égale à la première vitesse verticale limite. L'alarme est désactivée dès que la vitesse d'avancement prédictive $V_{AP}$ est supérieure à la seconde vitesse d'avancement limite ou bien dès que la vitesse verticale prédictive $V_{ZP}$ est supérieure à la seconde vitesse verticale limite.

Selon une troisième variante de l'invention, le seuil de vitesse d'avancement limite et le seuil de vitesse verticale limite sont constitués par la courbe du domaine de vortex déterminée à l'issue des vols d'essais préliminaires du giravion de référence de la famille de giravions. Ces seuils de vitesse d'avancement limite et de vitesse verticale limite sont donc variables.

L'alarme est alors déclenchée lorsque la vitesse d'avancement prédictive $V_{AP}$ et la vitesse verticale prédictive $V_{ZP}$ forment un point de fonctionnement prédictif du giravion situé sur ou bien en dessous de la courbe du domaine de vortex, l'alarme étant désactivée dès que la vitesse d'avancement prédictive $V_{AP}$ et la vitesse verticale prédictive $V_{ZP}$ forment un point de fonctionnement prédictif situé au-dessus de la courbe du domaine de vortex.

Selon une quatrième variante de l'invention, le seuil de vitesse d'avancement limite et le seuil de vitesse verticale limite sont constitués par deux courbes formant un seuil à hystérésis. Les deux courbes sont de préférence sensiblement parallèles et déterminées à l'issue des vols d'essais préliminaires du giravion de référence de la famille de giravions. Les seuils de vitesse d'avancement limite et de vitesse verticale limite sont donc, comme pour la troisième variante, variables.

Une courbe inférieure constitue la première borne de ce seuil à hystérésis et une courbe supérieure constitue la seconde borne de ce seuil à hystérésis. Par suite, l'alarme est déclenchée lorsque la vitesse d'avancement prédictive $V_{AP}$ et la vitesse verticale prédictive $V_{ZP}$ forment un point de fonctionnement prédictif du giravion situé sur ou bien en dessous de la courbe inférieure, l'alarme étant désactivée dès que la vitesse d'avancement prédictive $V_{AP}$ et la vitesse verticale prédictive $V_{ZP}$ forment un point de fonctionnement prédictif situé au-dessus de la courbe supérieure.

Enfin, lors de l'étape de signalisation, l'alarme est signalée à un pilote du giravion suite au déclenchement de l'alarme. Cette alarme peut être signalée de façon visuelle au pilote, par exemple par l'intermédiaire de l'allumage d'un voyant dédié ou bien l'affichage d'un message spécifique sur un écran d'information. Cette alarme peut également être signalée de façon sonore au pilote, par exemple par l'émission d'un son spécifique ou bien d'un message enregistré.

En outre, lors de l'étape de signalisation, des temporisations peuvent être utilisées entre le déclenchement de l'alarme et la signalisation au pilote du giravion de ce déclenchement de l'alarme ainsi qu'entre la désactivation de l'alarme et la signalisation au pilote de cette désactivation de l'alarme. Ces temporisations permettent d'éviter de signaler au pilote des déclenchements et des désactivations de l'alarme intempestifs et successifs. Ces temporisations sont particulièrement utiles lors de l'utilisation de seuils simples des vitesses d'avancement limite et verticale limite. L'utilisation des seuils à hystérésis permettent en effet de limiter ce risque de signaler au pilote des déclenchements et désactivations de l'alarme intempestifs et successifs.

Toutefois, l'utilisation des seuils à hystérésis et des temporisations peut être cumulée afin de gérer au mieux la signalisation du déclenchement et de la désactivation de l'alarme.

Par exemple, la signalisation au pilote du déclenchement de l'alarme se produit une seconde (1s) après le déclenchement de l'alarme et la signalisation au pilote de la désactivation de l'alarme se produit trois secondes (3s) après la désactivation de l'alarme.

Par ailleurs, le procédé selon l'invention peut comporter une étape d'inhibition désactivant le déclenchement de l'alarme ou bien la signalisation de cette alarme. De préférence, cette étape d'inhibition désactive la signalisation de l'alarme et est située par exemple entre l'étape de déclenchement d'une alarme et l'étape de signalisation.

Une première condition d'inhibition correspond par exemple à un giravion évoluant à une hauteur par rapport au sol inférieure ou égale à une hauteur limite. Cette première condition d'inhibition caractérise une position du giravion proche du sol qui correspond par exemple à une phase de décollage ou d'atterrissage. Cette position proche du sol peut également correspondre à une phase d'atterrissage avortée.

Une deuxième condition d'inhibition correspond à un giravion comportant au moins deux moteurs et entré dans un mode de fonctionnement d'urgence suite à un dysfonctionnement d'un des moteurs depuis une durée inférieure à une durée prédéterminée.

Ces deux conditions d'inhibition caractérisent des phases de vol particulières, voire d'urgence, monopolisant toute l'attention du pilote et du copilote. Ajouter la signalisation d'une alarme à une situation déjà complexe pourrait perturber le pilote et/ou le copilote dans la gestion de cette situation sans leur apporter d'aide supplémentaire. Il est donc préférable de ne pas leur signaler alors l'approche d'un domaine de vortex. De plus, le giravion se trouve dans une phase transitoire, par exemple suite à la perte d'un moteur, pouvant expliquer l'approche d'un domaine de vortex, mais le pilote et/ou le copilote du giravion gèrent alors cette situation pour revenir à une phase de vol stable et s'éloigner donc naturellement de ce domaine de vortex. Signaler au pilote et/ou au copilote cette approche d'un domaine de vortex ne leur apporte aucune aide dans ce contexte et peut au contraire le perturber dans le déroulement de la procédure à appliquer.

Par exemple, la hauteur limite est comprise entre 20 et 100 ft et la durée prédéterminée est égale à 30 secondes (30s). Ces valeurs sont généralement indépendantes de la famille du giravion. Cette durée de 30s correspond à la durée du régime de super urgence OEI 30s des giravions, cette valeur pouvant varier en fonction de la durée admissible de ce régime de super urgence.

Il est à noter que le seuil de vitesse d'avancement limite et le seuil de vitesse verticale limite déterminés lors de l'étape préliminaire correspondent à un domaine de vortex statique, l'assiette du plan du rotor principal du giravion étant considérée sensiblement nulle. Par suite, la comparaison de la vitesse d'avancement prédictive $V_{AP}$ avec le seuil de vitesse d'avancement limite et de la vitesse verticale prédictive $V_{ZP}$ avec le seuil de vitesse verticale limite permet de détecter l'approche d'un domaine de vortex statique, l'assiette du plan du rotor principal du giravion étant sensiblement nulle.

Par contre, au cours d'un vol, un giravion évolue fréquemment avec un plan du rotor principal incliné, notamment lorsque le giravion est en phase de décélération. Par suite, l'assiette longitudinale $\theta$ du giravion est non nulle, la direction longitudinale X du giravion étant inclinée de l'angle d'assiette $\theta$ vis-à-vis d'un plan horizontal. Dans ce cas, le giravion peut être en approche d'un domaine de vortex dynamique.

Dans le cadre de l'invention, on peut admettre que les angles formés d'une part par le plan du rotor principal du giravion par rapport à un plan horizontal et d'autre part par l'assiette du giravion par rapport à un plan horizontal sont identiques.

En réalité, le pilote du giravion commande tout d'abord l'inclinaison du plan du rotor principal du giravion qui entraîne ensuite le changement d'assiette du giravion qui se stabilise à un angle d'assiette sensiblement égal à cet angle du plan du rotor principal du giravion vis-à-vis d'un plan horizontal. Donc, l'angle $\theta$ formé par le plan du rotor principal du giravion par rapport à un plan horizontal et l'angle d'assiette du giravion par rapport à ce plan horizontal sont sensiblement identiques en fin de manoeuvre, mais différents pendant la période transitoire de réalisation de cette manoeuvre.

Cette approximation est possible car d'une part l'écart entre l'assiette du plan du rotor principal et l'assiette longitudinale $\theta$ du giravion est faible et/ou transitoire et d'autre part le procédé selon l'invention permet de détecter une approche d'un domaine de vortex sur un intervalle de temps de prédiction $\Delta t$.

Avantageusement, le diagramme du domaine de vortex statique déterminé lors de l'étape préliminaire est également adapté à la détection de l'approche d'un domaine de vortex dynamique. En effet, un changement de repère en appliquant une rotation du repère formé par les vitesses d'avancement et verticale instantanées $V_A, V_Z$ selon l'angle d'assiette $\theta$ permet de passer d'un domaine de vortex statique à un domaine de vortex dynamique.

Toutefois, lorsque la vitesse d'avancement $V_A$ du giravion est égale à la vitesse propre $V_P$ ou bien approximée par la vitesse conventionnelle $V_C$, la vitesse d'avancement prédictive $V_{AP}$ est situé dans le plan du rotor principal aussi bien pour un domaine de vortex statique que dynamique.

En conséquence, lors de l'étape de déclenchement d'une alarme, la vitesse verticale prédictive $V_{ZP}$ comparée au seuil de vitesse verticale limite est remplacée par la formule ($V_{ZP}.cos\theta$). Cette formule correspond ainsi à un changement de repère pour passer d'une repère de vortex dynamique au repère de vortex statique déterminé dans l'étape préliminaire.

Ainsi, quelle que soit la variante utilisée, le procédé de détection et de signalisation de l'approche d'un domaine de vortex par un giravion selon l'invention permet ainsi de déclencher une alarme lorsque le giravion est en approche d'un domaine de vortex de type statique, à savoir avec un angle d'assiette $\theta$ du giravion sensiblement nul, ou bien d'un domaine de vortex de type dynamique, à savoir avec un angle d'assiette $\theta$ du giravion non nul.

En outre, le procédé selon l'invention peut également permettre de déterminer si le giravion se situe à l'instant t courant dans un domaine de vortex. Dans ce but, lors de l'étape de calcul, la vitesse d'avancement prédictive $V_{AP}$ est remplacée par la vitesse d'avancement instantanée $V_A$ du giravion et la vitesse verticale prédictive $V_{ZP}$ est remplacée par la vitesse verticale instantanée $V_Z$ du giravion.

L'invention a également pour objet un dispositif de détection de l'approche d'un domaine de vortex par un giravion, le giravion appartenant à une famille de giravions. Le giravion comportant un rotor principal muni de pales, le dispositif de détection de l'approche d'un domaine de vortex comporte :

- un premier moyen de mesure pour mesurer une vitesse verticale instantanée $V_Z$ du giravion,
- un deuxième moyen de mesure pour mesurer une vitesse conventionnelle $V_C$ du giravion,
- un moyen de mémorisation contenant un seuil de vitesse d'avancement limite et un seuil de vitesse verticale limite définissant une limite d'entrée dans un domaine de vortex pour la famille de giravions du giravion,
- un moyen de calcul relié aux premier et deuxième moyens de mesure et au moyen de mémorisation, le moyen de calcul étant destiné à détecter l'approche d'un domaine de vortex par le giravion, et
- un moyen de signalisation signalant l'approche d'un domaine de vortex par le giravion, le moyen de signalisation étant relié au moyen de calcul.

Le premier moyen de mesure est par exemple un variomètre et le deuxième moyen de mesure de vitesse est un anémomètre. Le moyen de mémorisation peut être une mémoire contenant une base de données comportant le seuil de vitesse d'avancement limite et un seuil de vitesse verticale limite ainsi que les différentes relations permettant le calcul d'une vitesse d'avancement instantanée $V_A$, d'une accélération d'avancement instantanée $\dfrac{dV_A}{dt}$, d'une accélération verticale instantanée $\dfrac{dV_Z}{dt}$, des vitesses prédictives et de détecter l'approche d'un domaine de vortex par le giravion. Le moyen de calcul est par exemple un calculateur et le moyen de signalisation est un voyant ou bien un écran d'information sur lequel est affiché un message signalant l'alarme.

Le dispositif met en oeuvre le procédé de détection de l'approche d'un domaine de vortex par un giravion précédemment décrit afin de déterminer si le giravion est proche de rentrer dans un domaine de vortex.

L'invention et ses avantages apparaîtront avec plus de détails dans le cadre de la description suivante qui illustre des exemples de réalisation préférés, donnés sans aucun caractère limitatif, en référence aux figures annexées qui représentent :

- les figures 1 et 2, deux représentations d'un giravion,
- la figure 3, une illustration de l'écoulement de l'air en présence d'un rotor principal d'un giravion dans un domaine de vortex,
- la figure 4, un dispositif de détection de l'approche d'un domaine de vortex par un giravion selon l'invention,
- la figure 5, un schéma synoptique d'un procédé de détection de l'approche d'un domaine de vortex par un giravion,
- les figures 6 et 7, deux diagrammes représentant un domaine de vortex, et
- la figure 8, un diagramme simplifié représentant un domaine de vortex.

Les éléments présents dans plusieurs figures distinctes sont affectés d'une seule et même référence.

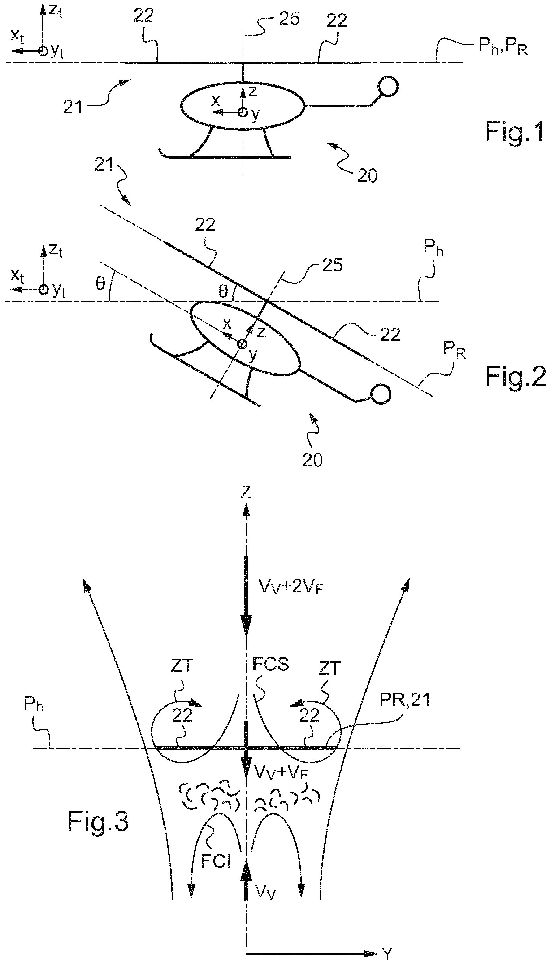

Sur les figures 1 et 2, un giravion 20 comporte un rotor principal 21 muni de pales 22 tournant autour d'un axe 25. Un repère orthonormé $(X,Y,Z)$ est attaché au giravion 20. Ce repère $(X,Y,Z)$ est défini par une direction longitudinale $X$ s'étendant de l'arrière du giravion 20 vers l'avant du giravion 20, une direction d'élévation $Z$ s'étendant de bas en haut perpendiculairement à la direction longitudinale $X$ et une direction transversale $Y$ s'étendant de droite à gauche perpendiculairement aux directions longitudinale $X$ et d'élévation $Z$. L'axe 25 du rotor principal 21 est sensiblement parallèle à la direction d'élévation $Z$.

Sur les figures 1 et 2, un repère terrestre $(X_t,Y_t,Z_t)$ est également représenté. Ce repère terrestre $(X_t,Y_t,Z_t)$ est défini par une direction verticale $Z_t$ parallèle à la direction de la pesanteur ainsi que les deux directions $X_t,Y_t$ définissant un plan horizontal $P_h$ perpendiculaire à la direction verticale $Z_t$.

On constate sur la figure 1 que la direction d'élévation $Z$ attachée au giravion 20 est parallèle à la direction verticale $Z_t$. Le plan $P_R$ formé par le rotor principal 21 est parallèle au plan horizontal $P_h$, le giravion 20 volant avec un angle d'assiette $\theta$ nulle. Sur la figure 2, le plan $P_R$ forme un angle $\theta$ avec le plan horizontal $P_h$ et le giravion 20 vole alors avec un angle d'assiette $\theta$. La direction d'élévation $Z$ attachée au giravion 20 forme également un angle égal à l'angle d'assiette $\theta$ avec la direction verticale $Z_t$ du repère terrestre $(X_t,Y_t,Z_t)$.

La figure 3 représente le rotor principal 21 évoluant dans un domaine de vortex statique. Le plan $P_R$ formé par le rotor principal 21 est parallèle au plan horizontal $P_h$ et donc perpendiculaire à la direction de la pesanteur. Les directions des vitesses de l'écoulement d'air représentées sur cette figure 3 correspondent à une descente lente et quasi-verticale du giravion 20.

La vitesse $Vv$ désigne la composante verticale de la vitesse amont de l'écoulement de l'air, normale au plan $P_R$ formé par le rotor principal 21 et la valeur $V_F$, appelée « vitesse de Froude » par l'homme du métier, est supérieure dans cette situation à la vitesse $Vv$. On constate qu'un sillage S se forme à la partie inférieure du rotor principal 21, ce qui oblige les filets d'air centraux supérieurs FCS à créer une zone tourbillonnaire ZT vers la périphérie des pales 22.

Dans ces conditions, un phénomène d'état de vortex manifesté en principe par des vibrations ressenties par l'équipage du giravion 20 prend naissance quand le giravion 20 amorce une descente purement verticale ou bien avec une forte pente de descente, le rotor principal 21 descendant alors dans son propre souffle et perdant de la portance en raison de son isolement par rapport à l'écoulement d'air. Une chute brutale du giravion 20 s'ensuit si aucune manoeuvre correctrice n'est entreprise par le pilote du giravion 20.

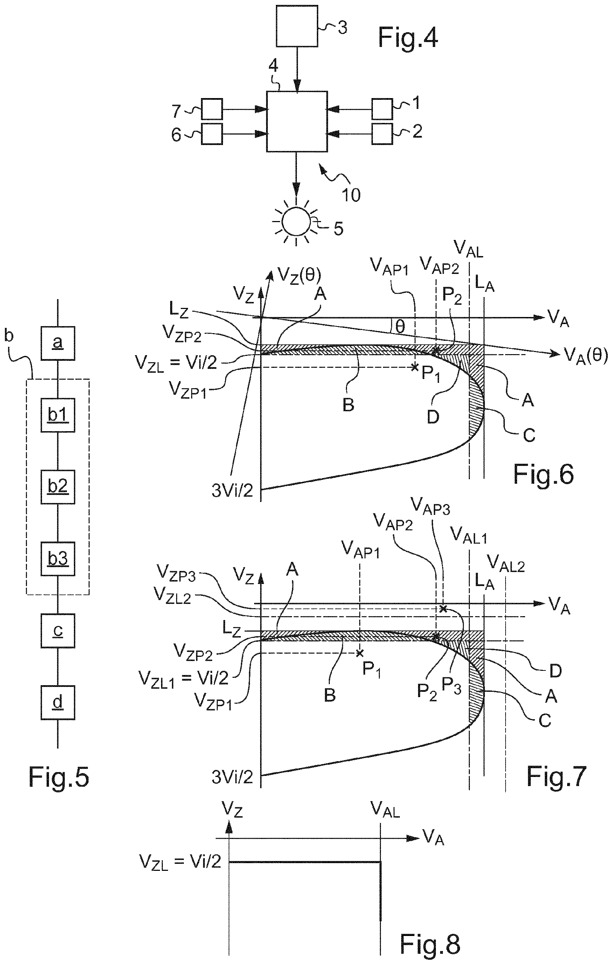

Pour remédier à cette situation dangereuse propre aux giravions, le giravion 20 peut comporter un dispositif 10 de détection et de signalisation de l'approche d'un domaine de vortex par un giravion 20. Ce dispositif 10 permet de mettre en oeuvre un procédé de détection et de signalisation de l'approche d'un domaine de vortex par le giravion 20 dont un schéma synoptique est représenté sur la figure 5.

Le dispositif 10 peut ainsi détecter puis signaler de façon prédictive au pilote du giravion 20 l'approche d'un domaine de vortex. Dès lors, le pilote peut prendre les mesures qui s'imposent en anticipant son action par rapport à cette approche, évitant ainsi l'entrée du giravion 20 dans ce domaine de vortex.

Le dispositif 10 est représenté sur la figure 4 et comporte :

- un premier moyen de mesure 1 pour mesurer la vitesse verticale instantanée $V_Z$ du giravion 20,
- un deuxième moyen de mesure 2 pour mesurer la vitesse conventionnelle $Vc$ du giravion 20,
- un moyen de mémorisation 3 permettant de stocker un seuil de vitesse d'avancement limite et un seuil de vitesse verticale limite définissant une limite d'entrée dans un domaine de vortex pour la famille de giravions du giravion 20, ainsi que différentes relations nécessaires à la mise en oeuvre du procédé,
- un moyen de calcul 4 relié aux premier et deuxième moyens de mesure 1,2 et au moyen de mémorisation 3, et destiné à appliquer ces relations et à détecter l'approche d'un domaine de vortex par le giravion 20,
- un moyen de signalisation 5 signalant l'approche d'un domaine de vortex par le giravion 20 au pilote du giravion 20, le moyen de signalisation 5 étant relié au moyen de calcul 4,

- un troisième moyen de mesure 6 relié au moyen de calcul 4 pour mesurer l'assiette longitudinale $\theta$ du giravion 20, et
- un quatrième moyen de mesure 7 relié au moyen de calcul 4 pour mesurer une accélération d'avancement instantanée $\dfrac{dV_A}{dt}$ et une accélération verticale instantanée $\dfrac{dV_Z}{dt}$ du giravion 20.

Le premier moyen de mesure 1 est par exemple un variomètre et le deuxième moyen de mesure 2 de vitesse est un anémomètre. Le moyen de mémorisation 3 peut être une mémoire contenant notamment une base de données comportant les seuils de vitesse d'avancement limite et de vitesse verticale limite ainsi que des caractéristiques de la famille de giravions du giravion 20. Le moyen de mémorisation 3 contient également les différentes relations utilisées par le moyen de calcul 4. Le moyen de calcul 4 est par exemple un calculateur et le moyen de signalisation 5 est un voyant situé sur un tableau de bord du giravion 20. Le troisième moyen de mesure 6 est par exemple un instrument d'horizon artificiel et le quatrième moyen de mesure 7 est un accéléromètre. Le troisième et le quatrième moyens de mesure 6,7 peuvent également être regroupés au sein d'un même dispositif connu sous l'acronyme « AHRS » désignant en langue anglaise « Attitude and Heading Reference System » et fournissant les accélérations et les angles d'assiette du giravion selon les trois axes du repère (X,Y,Z).

Toutefois, les accélérations d'avancement et verticale instantanées peuvent être déterminées par le moyen de calcul 4 par une dérivation temporelle des vitesses d'avancement et verticale instantanées $V_A, V_Z$. Le dispositif 10 ne comporte alors pas le quatrième moyen de mesure 7.

Le procédé de détection et de signalisation de l'approche d'un domaine de vortex par un giravion 20 comporte, comme représenté sur la figure 5, quatre étapes principales.

Tout d'abord, au cours d'une étape préliminaire (a), des séries de mesures de vitesses sont réalisées sur un giravion de référence lors de vols d'essais préliminaires en vue de déterminer un seuil de vitesse d'avancement limite et un seuil de vitesse verticale limite. Ces vols d'essais préliminaires sont effectués en limite des domaines de vortex et jusqu'à entrer dans ces domaines de vortex. Ces vols d'essais préliminaires permettent ainsi de déterminer tout d'abord un diagramme représentant une forme moyenne d'un vortex statique pour le giravion de référence et, par suite, pour l'ensemble des giravions 20 de la famille de giravions dont fait partie ce giravion de référence.

De tels diagrammes sont représentés sur les figures 6 et 7 dans un repère formé par la vitesse d'avancement instantanée $V_A$ du giravion 20 en abscisse et sa vitesse verticale instantanée $V_Z$ en ordonnée. A partir de chaque diagramme, des seuils de vitesse d'avancement limite et de vitesse verticale limite peuvent être déterminés, le seuil de vitesse d'avancement limite et le seuil de vitesse verticale limite définissant ainsi une limite d'entrée dans un domaine de vortex pour l'ensemble des giravions 20 de la famille de giravions à laquelle correspond ce diagramme.

Selon une première variante de l'invention correspondant au diagramme de la figure 6, le seuil de vitesse d'avancement limite et le seuil de vitesse verticale limite sont formés respectivement par un seuil simple et constant, à savoir une vitesse d'avancement limite $V_{AL}$ et par une vitesse verticale limite $VZL$.

La vitesse d'avancement limite $V_{AL}$ est inférieure à une première limite supérieur $L_A$ en vitesse d'avancement du domaine de vortex. De même, la vitesse verticale limite $V_{ZL}$, qui est égale à la moitié de la valeur moyenne de la vitesse induite $V_i$ du rotor principal 21 en vol stationnaire hors effet de sol, est inférieure à une seconde limite supérieur $L_Z$ en vitesse verticale du domaine de vortex.

Selon une deuxième variante de l'invention correspondant au diagramme de la figure 7, le seuil de vitesse d'avancement limite et le seuil de vitesse verticale limite sont formés respectivement par un premier et un second seuils à hystérésis. Ainsi, le seuil de vitesse d'avancement limite est constitué par une première vitesse d'avancement limite $V_{AL1}$ et une seconde vitesse d'avancement limite $V_{AL2}$. La première vitesse d'avancement limite $V_{AL1}$ est inférieure à la première limite supérieur $L_A$ et à la seconde vitesse d'avancement limite $V_{AL2}$ alors que la seconde vitesse d'avancement limite $V_{AL2}$ est supérieure à la première limite supérieur $L_A$.

De même, le seuil de vitesse verticale limite est constitué par une première vitesse verticale limite $V_{ZL1}$ et une seconde vitesse verticale limite $V_{ZL2}$. La première vitesse verticale limite $V_{ZL1}$, qui est égale à la moitié de la valeur moyenne de la vitesse induite $Vi$ du rotor principal 21 en vol stationnaire hors effet de sol, est inférieure à la seconde limite supérieur $L_Z$ et à la seconde vitesse verticale limite $V_{ZL2}$ alors que la seconde vitesse verticale limite $V_{ZL2}$ est supérieure à la seconde limite supérieur $L_Z$.

Ces vitesses d'avancement et verticales limites sont déterminées suite aux essais préliminaires effectués sur le giravion de référence de la famille de giravions.

En outre, selon une troisième variante de l'invention, le seuil de vitesse d'avancement limite et le seuil de vitesse verticale limite peuvent également être formés par la courbe supérieure du domaine de vortex déterminée à l'issue des vols d'essais préliminaires du giravion de référence de la famille de giravions. Ces seuils de vitesse d'avancement limite et de vitesse verticale limite sont donc variables.

Ensuite, au cours d'une étape de calcul (b), une vitesse d'avancement prédictive $V_{AP}$ et une vitesse verticale prédictive $V_{ZP}$ du giravion 20 sont déterminées en temps réel lors d'un vol du giravion 20. Cette étape de calcul (b) comporte des sous-étapes.

Lors d'une sous-étape de détermination (b1), la vitesse verticale instantanée $V_Z$ du giravion 20 est mesurée par le moyen de mesure 1 dans le repère terrestre $(X_t, Y_t, Z_t)$, à savoir selon la direction de la pesanteur.

Au cours de cette sous-étape de détermination (b1), la vitesse conventionnelle $Vc$ qui correspond à la vitesse du giravion 20 par rapport à l'air est également mesurée par le deuxième moyen de mesure 2 dans le repère $(X, Y, Z)$ attaché au giravion 20.

Cette mesure de la vitesse conventionnelle $Vc$ peut être selon la direction longitudinale X du giravion 20 si le deuxième moyen de mesure 2 est par exemple un anémomètre monodirectionnel aligné sur cette direction longitudinale X.

Cette mesure de la vitesse conventionnelle $Vc$ peut également être située dans un plan formé par les directions longitudinale X et transversale Y du giravion 20 lorsque le deuxième moyen de mesure 2 est un anémomètre bidirectionnel tel un anémomètre ultrasonique.

Cette mesure de la vitesse conventionnelle $Vc$ peut aussi être représentée par un vecteur selon les trois directions du repère $(X, Y, Z)$ attaché au giravion 20 lorsque le deuxième moyen de mesure 2 est un anémomètre tridirectionnel tel un anémomètre LIDAR.

Ensuite, le moyen de calcul 4 détermine la vitesse d'avancement instantanée $V_A$ à partir de cette mesure de la vitesse conventionnelle $Vc$ en appliquant notamment une correction barométrique.

La vitesse d'avancement instantanée $V_A$ peut être liée à la vitesse conventionnelle $Vc$ par la relation $Vc = V_A . \sqrt{\sigma}$ , et constituée ainsi la vitesse propre instantanée $V_P$ du giravion 20. La vitesse d'avancement prédictive $V_{AP}$ constitue alors une vitesse propre prédictive $V_{PP}$ du giravion 20.

La vitesse d'avancement instantanée $V_A$ peut également être approximée par une composante horizontale de la vitesse propre instantanée $V_P$ du giravion 20 qui est une projection dans un plan horizontal de la vitesse conventionnelle $Vc$ du giravion corrigée barométriquement. La vitesse d'avancement prédictive $V_{AP}$ constitue alors une composante horizontale de la vitesse propre prédictive du giravion 20.

Puis, lors d'une première sous-étape de calcul (b2), la vitesse d'avancement prédictive $V_{AP}$ est calculée selon une première relation: $V_{AP} = V_A + \Delta t . \dfrac{dV_A}{dt}$ , où $t$ et $\Delta t$ désignent respectivement le temps et l'intervalle de temps de prédiction, $\dfrac{dV_A}{dt}$ étant une accélération d'avancement instantanée du giravion 20.

Lors d'une deuxième sous-étape de calcul (b3), la vitesse verticale prédictive $V_{ZP}$ est calculée sous condition de la vitesse d'avancement instantanée $V_A$.

Si la vitesse d'avancement instantanée $V_A$ est supérieure à une vitesse limite supérieure, la vitesse verticale prédictive $V_{ZP}$ est calculée par une deuxième relation

$$V_{ZP} = V_Z + A . \left| V_A . \frac{dV_A}{dt} \right| + B . ( V_Z + k ) . \frac{V_{AP} - V_A}{2 . V_Y - V_{AP}} ,$$

k étant une constante caractéristique de la famille de giravions du giravion 20, $A$ étant un premier coefficient pondérateur, $B$ étant un deuxième coefficient pondérateur et $V_Y$ étant une vitesse prédéterminée de puissance minimale de la famille du giravion 20. L'expression $B . ( V_Z + k ) . \dfrac{V_{AP} - V_A}{2 . V_Y - V_{AP}}$ n'est en fait applicable pour calculer la vitesse verticale prédictive $V_{ZP}$ uniquement lorsque le giravion 20 vole d'une part avec une vitesse d'avancement instantanée $V_A$ inférieure à la vitesse prédéterminée de puissance minimale $V_Y$ de la famille du giravion 20 et supérieure à la vitesse limite supérieure, et d'autre part avec une vitesse d'avancement instantanée $V_A$ décroissante caractérisant une décélération du giravion 20.

Si la vitesse d'avancement instantanée $V_A$ est inférieure à une vitesse limite inférieure, la vitesse verticale prédictive $V_{ZP}$ est calculée par une troisième relation $V_{ZP} = V_Z + D . \Delta t . \dfrac{dV_Z}{dt}$ , $D$ étant un troisième coefficient pondérateur, $\dfrac{dV_Z}{dt}$ étant une accélération verticale instantanée du giravion 20.

Enfin, si la vitesse d'avancement instantanée $V_A$ est inférieure ou égale à la vitesse limite supérieure et supérieure ou égale à la vitesse limite inférieure, la vitesse verticale prédictive $V_{ZP}$ est une interpolation, par exemple linéaire, entre la deuxième et la troisième relations.

Toutefois, selon une autre alternative, la vitesse verticale prédictive $V_{ZP}$ peut être calculée selon une logique à hystérésis. De la sorte, la deuxième relation est également appliquée lorsque la vitesse d'avancement instantanée $V_A$ décroît à partir de la vitesse limite supérieure et reste supérieure ou égale à la vitesse limite inférieure. De même, la troisième relation est appliquée lorsque la vitesse d'avancement instantanée $V_A$ augmente à partir de la vitesse limite inférieure et reste inférieure ou égale à la vitesse limite supérieure.

Puis, au cours d'une étape de déclenchement (c), la vitesse d'avancement prédictive $V_{AP}$ et la vitesse verticale prédictive $V_{ZP}$ sont comparées respectivement et simultanément avec le seuil de vitesse d'avancement limite et le seuil de vitesse verticale limite, puis une alarme d'approche d'un domaine de vortex par un giravion 20 est déclenchée lorsque d'une part la vitesse d'avancement prédictive $V_{AP}$ a atteint le seuil de vitesse d'avancement limite et d'autre part la vitesse verticale prédictive $V_{ZP}$ a atteint le seuil de vitesse verticale limite.

Selon la première variante de l'invention, l'alarme est déclenchée lorsque d'une part la vitesse d'avancement prédictive $V_{AP}$ est inférieure ou égale à la vitesse d'avancement limite et d'autre part la vitesse verticale prédictive $V_{ZP}$ est inférieure ou égale à la vitesse verticale limite. L'alarme est par exemple déclenchée pour le premier point de fonctionnement prédictif P1 caractérisé par une première vitesse d'avancement prédictive $V_{AP1}$ inférieure à la vitesse d'avancement limite $V_{AL}$ et une première vitesse verticale prédictive $V_{ZP1}$ inférieure à la vitesse verticale limite $V_{ZL}$, ce premier point de fonctionnement prédictif P1 étant situé en dessous de la vitesse d'avancement limite $V_{AL}$ et à gauche de la vitesse verticale limite $V_{ZL}$ sur la figure 6.

L'alarme est ensuite désactivée dès que la vitesse d'avancement prédictive $V_{AP}$ est supérieure à la vitesse d'avancement limite ou bien dès que la vitesse verticale prédictive $V_{ZP}$ est supérieure à la vitesse verticale limite. L'alarme est par exemple désactivée pour le deuxième point de fonctionnement prédictif P2 caractérisé par une deuxième vitesse d'avancement prédictive $V_{AP2}$ supérieure à la vitesse d'avancement limite $V_{AL}$ et une deuxième vitesse verticale prédictive $V_{ZP2}$ toujours inférieure à la vitesse verticale limite $V_{ZL}$.

Suite à l'application de ce procédé de détection et de signalisation de l'approche d'un domaine de vortex et d'un temps de prédiction $\Delta t$ de 10 secondes, le diagramme représenté sur la figure 6 peut être simplifié selon le diagramme simplifié de la figure 8. En particulier, la zone inférieure du domaine de vortex de la figure 6 n'est pas considérée car ce domaine de vol n'est pas utile opérationnellement, et peut donc être supprimée du diagramme simplifié. Cette zone inférieure du domaine de vortex correspondant notamment à une vitesse de descente verticale de plus de 3000 ft/min. En effet, dans le cas d'une descente rapide, le giravion évolue à des vitesses horizontales élevées et en tout cas supérieures à la vitesse de puissance minimale $V_Y$.

De plus, la zone supérieure du domaine de vortex peut également être simplifiée en utilisant directement la vitesse d'avancement limite $V_{AL}$ et la vitesse verticale limite $V_{ZL}$ comme représenté sur la figure 8.

Selon la deuxième variante de l'invention, l'alarme est déclenchée lorsque d'une part la vitesse d'avancement prédictive $V_{AP}$ est inférieure ou égale à la première vitesse d'avancement limite $V_{AL1}$ et d'autre part la vitesse verticale prédictive $V_{ZP}$ est inférieure ou égale à la première vitesse verticale limite $V_{ZL1}$. L'alarme est par exemple déclenchée pour le premier point de fonctionnement prédictif P1 caractérisée par une première vitesse d'avancement prédictive $V_{AP1}$ inférieure à la première vitesse d'avancement limite $V_{AL1}$ et une première vitesse verticale prédictive $V_{ZP1}$ inférieure à la première vitesse verticale limite $V_{ZL1}$, ce premier point de fonctionnement prédictif P1 étant situé en dessous de la première vitesse d'avancement limite $V_{AL1}$ et à gauche de la première vitesse verticale limite $V_{ZL1}$ sur la figure 7.

L'alarme est ensuite désactivée dès que la vitesse d'avancement prédictive $V_{AP}$ est supérieure à la seconde vitesse d'avancement limite ou bien dès que la vitesse verticale prédictive $V_{ZP}$ est supérieure à la seconde vitesse verticale limite. L'alarme est par exemple désactivée pour le troisième point de fonctionnement prédictif P3 caractérisé par une troisième vitesse d'avancement prédictive $V_{AP3}$ supérieure à la seconde vitesse d'avancement limite $V_{AL2}$ et une troisième vitesse verticale prédictive $V_{ZP3}$ toujours inférieure à la première vitesse verticale limite $V_{ZL1}$.

Par contre, l'alarme n'est pas désactivée pour le deuxième point de fonctionnement prédictif P2 caractérisé par une deuxième vitesse d'avancement prédictive $V_{AP2}$ supérieure à la première vitesse d'avancement limite $V_{AL1}$ mais inférieure à la seconde vitesse d'avancement limite $V_{AL2}$ et une deuxième vitesse verticale prédictive $V_{ZP2}$ inférieure à la première vitesse verticale limite $V_{ZL1}$.

Il est à noter que, pour ces deux variantes, un point de fonctionnement prédictif du giravion 20 peut se situer dans le domaine de vortex, bien qu'il soit situé en dessous d'une première vitesse limite et au dessus d'une deuxième vitesse limite, par exemple pour les zones B et C des figures 6 et 7. Par exemple, un point de fonctionnement situé dans la zone B est situé en dessous de la vitesse d'avancement limite et au dessus de la vitesse verticale limite. Si le pilote du giravion 20 n'agit pas, le point de fonctionnement prédictif va continuer d'évoluer dans le domaine de vortex et atteindre la deuxième vitesse limite. L'alarme de détection de l'approche d'un domaine de vortex est alors déclenchée et correspond à un nouvel intervalle de temps de prédiction inférieur à l'intervalle de temps de prédiction $\Delta t$. Avantageusement, l'alarme est tout de même déclenchée et correspond à une détection de cette approche du domaine de vortex avec un intervalle de temps de prédiction réduit.

De même, un point de fonctionnement prédictif du giravion 20 peut se situer hors du domaine de vortex, bien qu'il soit situé en dessous des deux vitesses limites, par exemple pour la zone D des figures 6 et 7. Dans ce cas, l'alarme est déclenchée avant même que le point de fonctionnement prédictif entre dans le domaine de vortex, mais le giravion 20 a tout de même une trajectoire qui semble se diriger vers le domaine de vortex. L'alarme est ainsi déclenchée pour une détection d'une approche du domaine de vortex avec un intervalle de temps de prédiction augmenté.

La position des seuils de vitesses limites permet donc de trouver un compromis entre les dimensions d'une part des zones B et C et d'autre part de la zone D et, par suite, de limiter les variations de l'intervalle de temps de prédiction pour la détection de l'approche du domaine de vortex. De plus, la valeur de l'intervalle de temps de prédiction $\Delta t$ permet avantageusement que ces variations de l'intervalle de temps de prédiction restent acceptables pour que l'alarme soit déclenchée suffisamment tôt pour permettre au pilote d'exécuter la manoeuvre nécessaire pour éviter de rentrer réellement dans ce domaine de vortex.

L'objet de l'invention étant la détection de l'approche d'un domaine de vortex sur un intervalle de temps de prédiction $\Delta t$, l'approximation liée à ces positions des seuils de vitesses limites impacte principalement cet intervalle de temps de prédiction, sans générer de risque de non détection de l'approche d'un domaine de vortex ou bien de déclenchement de fausses alarmes.

Enfin, au cours d'une étape de signalisation (d), la détection de l'approche du domaine de vortex est signalée à un pilote du giravion 20 suite au déclenchement de l'alarme. Cette alarme est signalée de façon visuelle au pilote, par l'allumage du voyant 5.

En outre, lors de cette étape de signalisation, des temporisations peuvent être utilisées entre le déclenchement de l'alarme et la signalisation de ce déclenchement au pilote du giravion 20 ainsi qu'entre la désactivation de l'alarme et la signalisation de cette désactivation au pilote.

La comparaison des vitesses d'avancement et verticale prédictives $V_{AP}, V_{ZP}$ directement et respectivement avec les seuils de vitesses d'avancement et verticale limites correspond à la détection de l'approche d'un domaine de vortex statique, l'assiette du plan du rotor principal et l'assiette longitudinale $\theta$ du giravion étant considérées sensiblement nulles.

Cependant, un giravion évolue fréquemment, au cours d'un vol, avec un plan du rotor principal incliné, notamment lorsque le giravion est en phase de décélération. Par suite, la direction longitudinale X du giravion est inclinée avec un angle d'assiette $\theta$ vis-à-vis d'un plan horizontal. Dans ce cas, le giravion peut être en approche d'un domaine de vortex dynamique.

Avantageusement, les diagrammes représentant le domaine de vortex statique selon les figures 6, 7 et 8 sont également adaptés à la détection de l'approche d'un domaine de vortex dynamique. En effet, un changement de repère en appliquant une rotation du repère formé par les vitesses d'avancement et verticale instantanées $V_A, V_Z$ selon l'angle d'assiette $\theta$, comme représenté sur la figure 6, permet avantageusement d'utiliser la même représentation de vortex, que le giravion soit en approche d'un vortex statique ou bien d'un vortex dynamique.

Ainsi, lorsque ladite direction longitudinale X est inclinée d'un angle d'assiette $\theta$ par rapport à un plan horizontal, la vitesse verticale prédictive $V_{ZP}$ comparée au seuil de vitesse verticale limite est remplacée par la formule $(V_{ZP} \cdot cos\theta)$.

Ce changement de repère est appliqué uniquement à la vitesse verticale prédictive $V_{ZP}$. En effet, lorsque la vitesse d'avancement $V_A$ du giravion est égale à la vitesse propre $V_P$, la vitesse d'avancement prédictive $V_{AP}$ est situé dans le plan du rotor principal 21 aussi bien pour un domaine de vortex statique que dynamique.

Le procédé selon l'invention permet ainsi de détecter aussi bien l'approche d'un domaine de vortex statique que dynamique selon l'angle d'assiette $\theta$ du giravion.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention qui est définie dans les revendications suivantes.

## Revendications

1. Procédé de détection et de signalisation de l'approche d'un domaine de vortex par un giravion (20), ledit giravion (20) appartenant à une famille de giravions et comportant un rotor principal (21) muni de pales (22), **caractérisé en ce que** ledit procédé comporte les étapes suivantes :

a) une étape préliminaire de détermination d'un seuil de vitesse d'avancement limite et d'un seuil de vitesse verticale limite définissant une limite d'entrée dans un domaine de vortex pour ladite famille de giravions,
b) une étape de calcul en temps réel d'une vitesse d'avancement prédictive ($V_{AP}$) et d'une vitesse verticale prédictive ($V_{ZP}$) dudit giravion (20) lors d'un vol dudit giravion (20),

- ladite vitesse d'avancement prédictive ($V_{AP}$) étant calculée en fonction d'une vitesse d'avancement instantanée ($V_A$) et d'une accélération d'avancement instantanée $\left(\dfrac{dV_A}{dt}\right)$ dudit giravion (20) sur un intervalle de temps de prédiction $\Delta t$ caractérisant le temps de prédiction de ladite vitesse d'avancement prédictive ($V_{AP}$) et de ladite vitesse verticale prédictive ($V_{ZP}$),

- ladite vitesse verticale prédictive ($V_{ZP}$) étant calculée sous condition de ladite vitesse d'avancement instantanée ($V_A$),

• lorsque ladite vitesse d'avancement instantanée ($V_A$) est supérieure à une vitesse limite supérieure, ladite vitesse verticale prédictive ($V_{ZP}$) étant calculée en fonction de la vitesse verticale instantanée ($V_Z$) dudit giravion (20), du bilan énergétique dudit giravion (20) et de la variation de la puissance nécessaire dudit rotor principal (21) pour un vol en palier sur ledit intervalle de temps de prédiction $\Delta t$,

• lorsque ladite vitesse d'avancement instantanée ($V_A$) est inférieure à une vitesse limite inférieure, ladite vitesse verticale prédictive ($V_{ZP}$) étant calculée en fonction de ladite vitesse verticale instantanée ($V_Z$) et d'une accélération verticale instantanée $\left(\dfrac{dV_Z}{dt}\right)$ dudit giravion (20),

c) une étape de déclenchement d'une alarme d'approche d'un domaine de vortex par un giravion (20), ladite vitesse d'avancement prédictive ($V_{AP}$) et ladite vitesse verticale prédictive ($V_{ZP}$) étant comparées avec respectivement ledit seuil de vitesse d'avancement limite et ledit seuil de vitesse verticale limite, ladite alarme étant déclenchée lorsque d'une part ladite vitesse d'avancement prédictive ($V_{AP}$) a atteint ledit seuil de vitesse d'avancement limite et d'autre part ladite vitesse verticale prédictive ($V_{ZP}$) a atteint ledit seuil de vitesse verticale limite, et

d) une étape de signalisation de ladite alarme à un pilote dudit giravion (20) suite audit déclenchement de ladite alarme.

2. Procédé selon la revendication 1,
**caractérisé en ce que** lorsque ladite vitesse d'avancement instantanée ($V_A$) est inférieure ou égale à ladite vitesse limite supérieure et supérieure ou égale à ladite vitesse limite inférieure, ladite vitesse verticale prédictive ($V_{ZP}$) est une interpolation entre les deux cas précédents, à savoir lorsque ladite vitesse d'avancement instantanée ($V_A$) est supérieure à ladite vitesse limite supérieure et lorsque ladite vitesse d'avancement instantanée ($V_A$) est inférieure à ladite vitesse limite inférieure.

3. Procédé selon la revendication 1,
**caractérisé en ce que** lorsque ladite vitesse d'avancement instantanée ($V_A$) est inférieure ou égale à ladite vitesse limite supérieure et supérieure ou égale à ladite vitesse limite inférieure, ladite vitesse verticale prédictive ($V_{ZP}$) est calculée selon une logique à hystérésis entre les deux cas précédents, à savoir que lorsque ladite vitesse d'avancement instantanée ($V_A$) décroît à partir de ladite vitesse limite supérieure et reste supérieure ou égale à ladite vitesse limite inférieure, ladite vitesse verticale prédictive ($V_{ZP}$) est calculée selon le premier cas, c'est-à-dire en fonction de ladite vitesse verticale instantanée ($V_Z$), dudit bilan énergétique dudit giravion (20) et de ladite variation de ladite puissance nécessaire dudit rotor principal (21) pour un vol en palier sur ledit intervalle de temps de prédiction ($\Delta t$) et lorsque ladite vitesse d'avancement instantanée ($V_A$) augmente à partir de ladite vitesse limite inférieure et reste inférieure ou égale ladite vitesse limite supérieure, ladite vitesse verticale prédictive ($V_{ZP}$) est calculée selon le deuxième cas, c'est-à-dire en fonction de ladite vitesse verticale instantanée (Vz) et de ladite accélération verticale instantanée $\left(\dfrac{dV_Z}{dt}\right)$ dudit giravion (20).

4. Procédé selon l'une quelconque des revendications 1 à 3,
**caractérisé en ce que** ladite étape de calcul comprend des sous-étapes :

b1) une sous-étape de détermination de ladite vitesse d'avancement instantanée ($V_A$) et de ladite vitesse verticale instantanée ($V_Z$) dudit giravion (20),

b2) une première sous-étape de calcul de ladite vitesse d'avancement prédictive ($V_{AP}$) selon une première relation : $V_{AP} = V_A + \Delta t . \dfrac{dV_A}{dt}$ , où $t$ et $\Delta t$ désignent respectivement le temps et ledit intervalle de temps de

prédiction, $\left( \dfrac{dV_A}{dt} \right)$ étant une accélération d'avancement instantanée dudit giravion (20),

b3) une deuxième sous-étape de calcul de ladite vitesse verticale prédictive ($V_{ZP}$) sous condition de ladite vitesse d'avancement instantanée ($V_A$),

- lorsque ladite vitesse d'avancement instantanée ($V_A$) est supérieure à ladite vitesse limite supérieure, ladite vitesse verticale prédictive ($V_{ZP}$) est calculée par une deuxième relation

$$V_{ZP} = V_Z + A . \left| V_A . \dfrac{dV_A}{dt} \right| + B.(V_Z + k ). \dfrac{V_{AP} - V_A}{2.V_Y - V_{AP}} ,$$ $k$ étant une constante caractéristique de ladite famille de giravions dudit giravion (20), $A$ étant un premier coefficient pondérateur, $B$ étant un deuxième coefficient pondérateur et $V_Y$ étant une vitesse prédéterminée de puissance minimale de ladite famille dudit giravion (20), l'expression $B.(V_Z + k ). \dfrac{V_{AP} - V_A}{2.V_Y - V_{AP}}$ n'étant applicable pour calculer ladite vitesse verticale prédictive ($V_{ZP}$) uniquement lorsque ledit giravion (20) vole d'une part avec une faible vitesse d'avancement instantanée ($V_A$) inférieure à ladite vitesse prédéterminée de puissance minimale $(V_Y)$ de ladite famille dudit giravion (20), mais toujours supérieure à ladite vitesse limite supérieure, et d'autre part avec une vitesse d'avancement instantanée ($V_A$) décroissante caractérisant une décélération dudit giravion (20),
- lorsque ladite vitesse d'avancement instantanée ($V_A$) est inférieure à ladite vitesse limite inférieure, ladite vitesse verticale prédictive ($V_{ZP}$) est calculée par une troisième relation $V_{ZP} = V_Z + D.\Delta t . \dfrac{dV_Z}{dt}$ , $D$

étant un troisième coefficient pondérateur, $\left( \dfrac{dV_Z}{dt} \right)$ étant une accélération verticale instantanée dudit giravion (20).

**5.** Procédé selon la revendication 4,
**caractérisé en ce que** ladite constante caractéristique k est égale à 4000 ft/mn, ledit premier coefficient pondérateur $A$ est égal à -0.05, ledit deuxième coefficient pondérateur $B$ est égal à 1 lorsque $V_A \leq V_Y$ et nulle lorsque $V_A > V_Y$ et ledit troisième coefficient pondérateur $D$ est égal à 0.5.

**6.** Procédé selon l'une quelconque des revendications 1 à 5,
**caractérisé en ce que** ledit seuil de vitesse d'avancement limite et ledit seuil de vitesse verticale limite sont constitués par une courbe du domaine de vortex dans un diagramme où les abscisses et les ordonnées correspondent respectivement auxdites vitesse d'avancement instantanée ($V_A$) et vitesse verticale instantanée ($V_Z$) dudit giravion (20), ladite courbe du domaine de vortex étant représentatif d'un état de vortex de ladite famille dudit giravion (20) et déterminée suite à des mesures préalables en vol sur un giravion de référence de ladite famille de giravions, et, lors de ladite étape de déclenchement d'une alarme, ladite alarme est déclenchée lorsque ladite vitesse d'avancement prédictive ($V_{AP}$) et ladite vitesse verticale prédictive ($V_{ZP}$) forment un point de fonctionnement prédictif dudit giravion (20) situé sur ou bien en dessous de ladite courbe du domaine de vortex, ladite alarme étant désactivée dès que ladite vitesse d'avancement prédictive ($V_{AP}$) et ladite vitesse verticale prédictive ($V_{ZP}$) forment un point de fonctionnement prédictif situé au-dessus de ladite courbe du domaine de vortex.

**7.** Procédé selon l'une quelconque des revendications 1 à 5,
**caractérisé en ce que** ledit seuil de vitesse d'avancement limite est constitué par une vitesse d'avancement limite et ledit seuil de vitesse verticale limite est constitué par une vitesse verticale limite, et, lors de ladite étape de déclenchement d'une alarme, ladite alarme est déclenchée lorsque d'une part ladite vitesse d'avancement prédictive ($V_{AP}$) est inférieure ou égale à ladite vitesse d'avancement limite et d'autre part ladite vitesse verticale prédictive

($V_{ZP}$) est inférieure ou égale à ladite vitesse verticale limite, ladite alarme étant désactivée dès que ladite vitesse d'avancement prédictive ($V_{AP}$) est supérieure à ladite vitesse d'avancement limite ou bien que ladite vitesse verticale prédictive ($V_{ZP}$) est supérieure à ladite vitesse verticale limite.

8. Procédé selon la revendication 7,
**caractérisé en ce que** ladite vitesse verticale limite correspond à la moitié d'une valeur moyenne de la vitesse induite dudit rotor principal (21) lorsque ledit giravion (20) évolue en vol stationnaire hors effet de sol.

9. Procédé selon l'une quelconque des revendications 7 à 8,
**caractérisé en ce que** ladite vitesse d'avancement limite est égale à 25 kt et ladite vitesse verticale limite est égale à -1200 ft/mn.

10. Procédé selon l'une quelconque des revendications 1 à 9,
**caractérisé en ce que** ledit seuil de vitesse d'avancement est un premier seuil à hystérésis constitué par une première vitesse d'avancement limite et une seconde vitesse d'avancement limite, ladite première vitesse d'avancement limite étant inférieure à ladite seconde vitesse d'avancement limite, ledit seuil de vitesse verticale limite est un second seuil à hystérésis constitué par une première vitesse verticale limite et une seconde vitesse verticale limite, ladite première vitesse verticale limite étant inférieure à ladite seconde vitesse verticale limite, et, lors de ladite étape de déclenchement d'une alarme d'approche d'un domaine de vortex par un giravion (20), ladite alarme est déclenchée lorsque d'une part ladite vitesse d'avancement prédictive ($V_{AP}$) est inférieure ou égale à ladite première vitesse d'avancement limite et d'autre part ladite vitesse verticale prédictive ($V_{ZP}$) est inférieure ou égale à ladite première vitesse verticale limite, ladite alarme étant désactivée dès que ladite vitesse d'avancement prédictive ($V_{AP}$) est supérieure à ladite seconde vitesse d'avancement limite ou bien que ladite vitesse verticale prédictive ($V_{ZP}$) est supérieure à ladite seconde vitesse verticale limite.

11. Procédé selon la revendication 10,
**caractérisé en ce qu'**une desdites première et seconde vitesses verticales limites correspond à la moitié d'une valeur moyenne de la vitesse induite dudit rotor principal (21) lorsque ledit giravion (20) évolue en vol stationnaire hors effet de sol.

12. Procédé selon l'une quelconque des revendications 10 à 11,
**caractérisé en ce que** ladite première vitesse d'avancement limite est égale à 21 kt, ladite seconde vitesse d'avancement limite est égale à 26 kt, ladite première vitesse verticale limite est égale à -800 ft/mn et ladite seconde vitesse verticale limite est égale à -1200 ft/mn.

13. Procédé selon l'une quelconque des revendications 1 à 12,
**caractérisé en ce que** ladite vitesse limite inférieure est égale à 15 kt et ladite vitesse limite supérieure est égale à 35 kt.

14. Procédé selon l'une quelconque des revendications 1 à 13,
**caractérisé en ce que** ledit procédé comporte une étape d'inhibition (e) de l'alarme désactivant ladite signalisation de ladite alarme audit pilote dudit giravion (20) lorsque ledit giravion (20) évolue à une hauteur par rapport au sol inférieure ou égale à une hauteur limite ou bien lorsque ledit giravion comportant au moins deux moteurs est entré dans un mode de fonctionnement d'urgence suite à un dysfonctionnement d'un desdits moteur depuis une durée inférieure à une durée prédéterminée.

15. Procédé selon la revendication 14,
**caractérisé en ce que** ladite hauteur limite est comprise entre 20 et 100 pieds (20 à 100ft) et ladite durée prédéterminée est égale à 30s.

16. Procédé selon l'une quelconque des revendications 1 à 15,
**caractérisé en ce que**, lors de ladite étape de signalisation, des temporisations sont utilisées entre ledit déclenchement de ladite alarme et ladite signalisation audit pilote dudit giravion (20) dudit déclenchement de ladite alarme ainsi qu'entre la désactivation de ladite alarme et ladite signalisation audit pilote de ladite désactivation de ladite alarme.

17. Procédé selon l'une quelconque des revendications 1 à 16,
**caractérisé en ce que**, ledit giravion étant **caractérisé par** trois directions privilégiées, une direction longitudinale X s'étendant de l'arrière dudit giravion (20) vers l'avant dudit giravion (20), une direction d'élévation Z s'étendant de bas en haut perpendiculairement à ladite direction longitudinale X et une direction transversale Y s'étendant de droite à gauche perpendiculairement auxdites directions longitudinale X et d'élévation Z, lorsque ladite direction longitudinale X est inclinée d'un angle $\theta$ par rapport à un plan horizontal, ladite vitesse verticale prédictive ($V_{ZP}$) est remplacée par une formule ($V_{ZP} \cdot \cos\theta$) qui est comparée audit seuil de vitesse verticale limite.

18. Procédé selon l'une quelconque des revendications 1 à 17, **caractérisé en ce que**, lors de ladite étape de calcul, ladite vitesse d'avancement prédictive ($V_{AP}$) est égale à ladite vitesse d'avancement instantanée ($V_A$) dudit giravion (20) et ladite vitesse verticale prédictive ($V_{ZP}$) est égale à ladite vitesse verticale instantanée (Vz) dudit giravion (20) afin de déterminer lors de ladite étape de déclenchement d'une alarme si ledit giravion (20) est dans un domaine de vortex à l'instant *t* courant.

19. Procédé selon l'une quelconque des revendications 1 à 18, **caractérisé en ce que** ladite vitesse d'avancement instantanée ($V_A$) et ladite vitesse d'avancement prédictive ($V_{AP}$) dudit giravion (20) sont formées respectivement par une vitesse propre instantanée ($V_P$) et une vitesse propre prédictive ($V_{PP}$) dudit giravion (20).

20. Procédé selon l'une quelconque des revendications 1 à 18, **caractérisé en ce que** ladite vitesse d'avancement instantanée ($V_A$) et ladite vitesse d'avancement prédictive ($V_{AP}$) dudit giravion (20) sont formées respectivement par une composante horizontale d'une vitesse propre instantanée ($V_P$) et une composante horizontale d'une vitesse propre prédictive ($V_{PP}$) dudit giravion (20).

21. Dispositif (10) de détection et de signalisation de l'approche d'un domaine de vortex par un giravion (20), ledit giravion (20) appartenant à une famille de giravions, ledit giravion (20) comportant un rotor principal (21) muni de pales (22), ledit dispositif (10) comportant :

- un premier moyen de mesure (1) pour mesurer une vitesse verticale instantanée ($V_Z$) dudit giravion (20),
- un deuxième moyen de mesure (2) pour mesurer une vitesse conventionnelle ($V_C$) du giravion (20),
- un moyen de mémorisation (3) contenant un seuil de vitesse d'avancement limite et un seuil de vitesse verticale limite définissant une limite d'entrée dans un domaine de vortex pour ladite famille de giravions dudit giravion (20),
- un moyen de calcul (4) relié aux premier et deuxième moyens de mesure (1,2) et ledit moyen de mémorisation (3), ledit moyen de calcul (4) étant destiné à calculer une vitesse d'avancement instantanée ($V_A$), une accélération verticale instantanée ($\frac{dV_Z}{dt}$) et une accélération d'avancement instantanée ($\frac{dV_A}{dt}$) du giravion (20) et détecter l'approche d'un domaine de vortex par ledit giravion (20), et
- un moyen de signalisation (5) signalant l'approche d'un domaine de vortex par ledit giravion (20), ledit moyen de signalisation (5) étant relié audit moyen de calcul (4),

**caractérisé en ce que** ledit dispositif (10) met en oeuvre ledit procédé selon l'une quelconque des revendications 1 à 20.

## Patentansprüche

1. Verfahren zur Erfassung und Signalisierung der Annäherung eines Drehflügelflugzeugs (20) an einen Wirbelbereich, wobei das Drehflügelflugzeug (20) einer Drehflügelflugzeugfamilie angehört und einen Hauptrotor (21) versehen mit Rotorblättern (22) aufweist, **dadurch gekennzeichnet, dass** das Verfahren folgende Schritte aufweist:

a) einen Vorlaufschritt der Bestimmung eines Schwellenwerts der Grenzvortriebsgeschwindigkeit und eines Schwellenwerts der vertikalen Grenzgeschwindigkeit, die einen Grenzwert des Eintritts in einen Wirbelbereich für die Drehflügelflugzeugfamilie definieren,
b) einen Rechenschritt in Echtzeit einer Vorhersage-Vortriebsgeschwindigkeit ($V_{AP}$) und einer Vorhersage-Vertikalgeschwindigkeit ($V_{ZP}$) des Drehflügelflugzeugs (20) während eines Fluges des Drehflügelflugzeugs (20),

- wobei die Vorhersage-Vortriebsgeschwindigkeit ($V_{AP}$) berechnet wird in Abhängigkeit von einer augenblicklichen Vortriebsgeschwindigkeit (V$_A$) und einer augenblicklichen Vortriebsbeschleunigung $\left(\frac{dV_a}{dt}\right)$ des Drehflügelflugzeugs (20) in einem Vorhersage-Zeitintervall Δt, welches die Vorhersagezeit der Vorhersage-Vortriebsgeschwindigkeit (V$_{AP}$) und die Vorhersage-Vertikalgeschwindigkeit (V$_{ZP}$) charakterisiert,

- wobei die Vorhersage-Vertikalgeschwindigkeit (V$_{ZP}$) bedingt durch die augenblickliche Vortriebsgeschwindigkeit (V$_A$) berechnet wird,

• wenn die augenblickliche Vortriebsgeschwindigkeit (V$_A$) größer als eine obere Grenzgeschwindigkeit ist, die Vorhersage-Vertikaleschwindigkeit (V$_{ZP}$) berechnet wird in Abhängigkeit von der augenblicklichen vertikalen Geschwindigkeit (Vz) des Drehflügelflugzeugs (20), der Energiebilanz des Drehflügelflugzeugs (20) und der Änderung der notwendigen Leistung des Hauptrotors (21) für einen Horizontalflug in dem Vorhersage-Zeitintervall Δt,

• wenn die augenblickliche Vortriebsgeschwindigkeit (V$_A$) kleiner ist als eine untere Grenzgeschwindigkeit, die Vorhersage-Vertikalgeschwindigkeit (V$_{ZP}$) berechnet wird in Abhängigkeit von der augenblicklichen vertikalen Geschwindigkeit (V$_Z$) und einer augenblicklichen vertikalen Beschleunigung $\left(\frac{dV_z}{dt}\right)$ des Drehflügelflugzeugs (20),

c) einen Schritt des Auslösens eines Alarms bei der Annäherung eines Drehflügelflugzeugs (20) an einen Wirbelbereich, wobei die Vorhersage-Vortriebsgeschwindigkeit (V$_{AP}$) und die Vorhersage-Vertikalgeschwindigkeit (V$_{ZP}$) jeweils mit dem Schwellenwert der Grenzvortriebsgeschwindigkeit und dem Schwellenwert der vertikalen Grenzgeschwindigkeit verglichen werden, wobei der Alarm ausgelöst wird, wenn einerseits die Vorhersage-Vortriebsgeschwindigkeit (V$_{AP}$) den Schwellenwert der Grenzvortriebsgeschwindigkeit erreicht hat, und andererseits die Vorhersage-Vertikalgeschwindigkeit (V$_{ZP}$) den Schwellenwert der vertikalen Grenzgeschwindigkeit erreicht hat, und

d) einen Schritt der Signalisierung des Alarms an einen Piloten des Drehflügelflugzeugs (20) nach dem Auslösen des Alarms.

2. Verfahren nach Anspruch 1,
**dadurch gekennzeichnet, dass**, wenn die augenblickliche Vortriebsgeschwindigkeit (V$_A$) kleiner oder gleich der oberen Grenzgeschwindigkeit ist und größer oder gleich der unteren Grenzgeschwindigkeit ist, die Vorhersage-Vertikalgeschwindigkeit (V$_{ZP}$) eine Interpolation zwischen den beiden vorigen Fällen ist, d.h. wenn die augenblickliche Vortriebsgeschwindigkeit (V$_A$) größer ist als die obere Grenzgeschwindigkeit, und wenn die augenblickliche Vortriebsgeschwindigkeit (V$_A$) kleiner ist als die untere Grenzgeschwindigkeit.

3. Verfahren nach Anspruch 1,
**dadurch gekennzeichnet, dass**, wenn die augenblickliche Vortriebsgeschwindigkeit (V$_A$) kleiner oder gleich der oberen Grenzgeschwindigkeit ist und größer oder gleich der unteren Grenzgeschwindigkeit ist, die Vorhersage-Vertikalgeschwindigkeit (V$_{ZP}$) berechnet wird gemäß einer Hystereselogik zwischen den beiden vorigen Fällen, d.h. wenn die augenblickliche Vortriebsgeschwindigkeit (V$_A$) ausgehend von der oberen Grenzgeschwindigkeit abnimmt und größer oder gleich der unteren Grenzgeschwindigkeit bleibt, die Vorhersage-Vertikalgeschwindigkeit (V$_{ZP}$) berechnet wird gemäß dem ersten Fall, d.h. in Abhängigkeit von der augenblicklichen vertikalen Geschwindigkeit (Vz), von der Energiebilanz des Drehflügelflugzeugs (20) und von der Änderung der für einen Horizontalflug in dem Vorhersage-Zeitintervall (Δt) notwendigen Leistung, und wenn die augenblickliche Vortriebsgeschwindigkeit (V$_A$) ausgehend von der unteren Grenzgeschwindigkeit steigt und kleiner oder gleich der oberen Grenzgeschwindigkeit bleibt, die Vorhersage-Vertikalgeschwindigkeit (V$_{ZP}$) gemäß dem zweiten Fall berechnet wird, d.h. in Abhängigkeit von der augenblicklichen vertikalen Geschwindigkeit (V$_Z$) und der augenblicklichen Vertikalbeschleunigung $\left(\frac{dV_z}{dt}\right)$ des Drehflügelflugzeugs (20).

4. Verfahren nach einem der Ansprüche 1 bis 3,
**dadurch gekennzeichnet, dass** der Rechenschritt Unterschritte aufweist:

b1) einen Unterschritt der Bestimmung der augenblicklichen Vortriebsgeschwindigkeit (V$_A$) und der augenblicklichen Vertikalgeschwindigkeit (V$_Z$) des Drehflügelflugzeugs (20),

b2) einen ersten Unterschritt der Berechnung der Vorhersage-Vortriebsgeschwindigkeit ($V_{AP}$) gemäß einer ersten Beziehung: $V_{AP} = V_A + \Delta t . \frac{dV_A}{dt}$, wobei t und $\Delta t$ jeweils die Zeit und das Vorhersage-Zeitintervall bezeichnen, $\left(\frac{dV_A}{dt}\right)$ eine augenblickliche Vortriebsbeschleunigung des Drehflügelflugzeugs (20) ist,

b3) einen zweiten Unterschritt der Berechnung der Vorhersage-Vertikalgeschwindigkeit ($V_{ZP}$) bedingt durch die augenblickliche Vortriebsgeschwindigkeit ($V_A$),

- wenn die augenblickliche Vortriebsgeschwindigkeit ($V_A$) größer ist als die obere Grenzgeschwindigkeit, die Vorhersage-Vertikalgeschwindigkeit ($V_{ZP}$) berechnet wird durch eine zweite Beziehung

$$V_{ZP} = V_Z + A . \left| V_A . \frac{dV_A}{dt} \right| + B . (V_Z + k) . \frac{V_{AP} - V_A}{2 . V_Y - V_{AP}}$$ , wobei k eine charakteristische Konstante der Drehflügelflugzeugfamilie des Drehflügelflugzeugs (20) ist, A ein erster Wichtungskoeffizient ist, B ein zweiter Wichtungskoeffizient ist, und $V_Y$ eine vorbestimmte Geschwindigkeit bei minimaler Leistung der Familie des Drehflügelflugzeugs (20) ist, wobei die Beziehung $B . (V_Z + k) . \frac{V_{AP} - V_A}{2 . V_Y - V_{AP}}$ nur dann zur Berechnung der Vorhersage-Vertikalgeschwindigkeit ($V_{ZP}$) anwendbar ist, wenn das Drehflügelflugzeug (20) einerseits mit einer geringen augenblicklichen Vortriebsgeschwindigkeit ($V_A$) fliegt, die kleiner als die vorbestimmte Geschwindigkeit bei minimaler Leistung ($V_Y$) der Familie des Drehflügelflugzeugs (20) ist, aber immer größer als die obere Grenzgeschwindigkeit, und andererseits mit einer abnehmenden Vortriebsgeschwindigkeit ($V_A$), die eine Verlangsamung des Drehflügelflugzeugs (20) charakterisiert,

- wenn die augenblickliche Vortriebsgeschwindigkeit ($V_A$) kleiner ist als die untere Grenzgeschwindigkeit, die Vorhersage-Vertikalgeschwindigkeit ($V_{ZP}$) durch eine dritte Beziehung $V_{ZP} = V_Z + D . \Delta t . \frac{dV_Z}{dt}$ berechnet wird, wobei D ein dritter Wichtungskoeffizient ist, $\left(\frac{dV_Z}{dt}\right)$ eine augenblickliche vertikale Beschleunigung des Drehflügelflugzeugs (20) ist.

**5.** Verfahren nach Anspruch 4,
**dadurch gekennzeichnet, dass** die charakteristische Konstante k gleich 4000 ft/mn ist, der erste Wichtungskoeffizient A gleich -0,05 ist, der zweite Wichtungskoeffizient B gleich 1 ist, wenn $V_A \le V_Y$ ist, und Null ist, wenn $V_A > V_Y$ ist, und der dritte Wichtungskoeffizient D gleich 0,5 ist.

**6.** Verfahren nach einem der Ansprüche 1 bis 5,
**dadurch gekennzeichnet, dass** der Schwellenwert der Grenzvortriebsgeschwindigkeit und der Schwellenwert der vertikalen Grenzgeschwindigkeit gebildet werden durch eine Kurve des Wirbelbereichs in einem Diagramm, in dem die Abszissen und die Ordinaten jeweils der augenblicklichen Vortriebsgeschwindigkeit ($V_A$) und der augenblicklichen vertikalen Geschwindigkeit ($V_Z$) des Drehflügelflugzeugs (20) entsprechen, wobei die Kurve des Wirbelbereichs einen Zustand des Wirbels der Familie des Drehflügelflugzeugs (20) darstellt und nach vorherigen Messungen im Flug an einem Referenzdrehflügelflugzeug der Familie von Drehflügelflugzeugen bestimmt ist, und während des Schrittes des Auslösens eines Alarms der Alarm ausgelöst wird, wenn die Vorhersage-Vortriebsgeschwindigkeit ($V_{AP}$) und die Vorhersage-Vertikalgeschwindigkeit ($V_{ZP}$) einen Vorhersage-Betriebspunkt des Drehflügelflugzeugs (20) bilden, der auf oder unterhalb der Kurve des Wirbelbereichs liegt, wobei der Alarm deaktiviert wird, sobald die Vorhersage-Vortriebsgeschwindigkeit ($V_{AP}$) und die Vorhersage-Vertikalgeschwindigkeit ($V_{ZP}$) einen Vorhersage-Betriebspunkt bilden, der über der Kurve des Wirbelbereichs liegt.

**7.** Verfahren nach einem der Ansprüche 1 bis 5,
**dadurch gekennzeichnet, dass** der Schwellenwert der Grenzvortriebsgeschwindigkeit gebildet wird durch eine Grenzvortriebsgeschwindigkeit und der Schwellenwert der vertikalen Grenzgeschwindigkeit gebildet wird durch eine vertikale Grenzgeschwindigkeit, und während des Schrittes des Auslösens eines Alarms der Alarm ausgelöst wird, wenn einerseits die Vorhersage-Vortriebsgeschwindigkeit ($V_{AP}$) kleiner oder gleich der Grenzvortriebsgeschwindigkeit ist, und andererseits die Vorhersage-Vertikalgeschwindigkeit ($V_{ZP}$) kleiner oder gleich der vertikalen Grenzgeschwindigkeit ist, wobei der Alarm deaktiviert wird, sobald die Vorhersage-Vortriebsgeschwindigkeit ($V_{AP}$) größer ist als die Grenzvortriebsgeschwindigkeit oder wenn die Vorhersage-Vertikalgeschwindigkeit ($V_{ZP}$) größer ist als die vertikale Grenzgeschwindigkeit.

8. Verfahren nach Anspruch 7,
   **dadurch gekennzeichnet, dass** die vertikale Grenzgeschwindigkeit der Hälfte eines Mittelwerts der induzierten Geschwindigkeit des Hauptrotors (21) entspricht, wenn das Drehflügelflugzeug (20) in einem stationären Flug ohne Bodeneffekt fliegt.

9. Verfahren nach einem der Ansprüche 7 bis 8,
   **dadurch gekennzeichnet, dass** die Grenzvortriebsgeschwindigkeit gleich 25 kt ist und die vertikale Grenzgeschwindigkeit gleich -1200 ft/mn ist.

10. Verfahren nach einem der Ansprüche 1 bis 9,
    **dadurch gekennzeichnet, dass** der Schwellenwert der Vortriebsgeschwindigkeit ein erster Schwellenwert mit Hysterese ist, der gebildet wird durch eine erste Grenzvortriebsgeschwindigkeit und eine zweite Grenzvortriebsgeschwindigkeit, wobei die erste Grenzvortriebsgeschwindigkeit kleiner als die zweite Grenzvortriebsgeschwindigkeit ist, wobei der Schwellenwert der vertikalen Grenzgeschwindigkeit ein zweiter Schwellenwert mit Hysterese ist, der gebildet wird durch eine erste vertikale Grenzgeschwindigkeit und eine zweite vertikale Grenzgeschwindigkeit, wobei die erste vertikale Grenzgeschwindigkeit kleiner ist als die zweite vertikale Grenzgeschwindigkeit, und während des Schrittes des Auslösens eines Alarms der Annäherung an einen Wirbelbereich durch ein Drehflügelflugzeug (20) der Alarm ausgelöst wird, wenn einerseits die Vorhersage-Vortriebsgeschwindigkeit ($V_{AP}$) kleiner oder gleich der ersten Grenzvortriebsgeschwindigkeit ist, und andererseits die Vorhersage-Vertikalgeschwindigkeit ($V_{ZP}$) kleiner oder gleich der ersten vertikalen Grenzgeschwindigkeit ist, wobei der Alarm deaktiviert wird, sobald die Vorhersage-Vortriebsgeschwindigkeit ($V_{AP}$) größer ist als die zweite Grenzvortriebsgeschwindigkeit oder wenn die Vorhersage-Vertikalgeschwindigkeit ($V_{ZP}$) größer ist als die zweite vertikale Grenzgeschwindigkeit.

11. Verfahren nach Anspruch 10,
    **dadurch gekennzeichnet, dass** die erste und die zweite vertikale Grenzgeschwindigkeit der Hälfte eines Mittelwerts der induzierten Geschwindigkeit des Hauptrotors (21) entspricht, wenn das Drehflügelflugzeug (20) im stationären Flug ohne Bodeneffekt fliegt.

12. Verfahren nach einem der Ansprüche 10 bis 11,
    **dadurch gekennzeichnet, dass** die erste Grenzvortriebsgeschwindigkeit gleich 21 kt ist, die zweite Grenzvortriebsgeschwindigkeit gleich 26 kt ist, die erste vertikale Grenzgeschwindigkeit gleich -800 ft/mn ist und die zweite vertikale Grenzgeschwindigkeit gleich -1200 ft/mn ist.

13. Verfahren nach einem der Ansprüche 1 bis 12,
    **dadurch gekennzeichnet, dass** die untere Grenzgeschwindigkeit gleich 15 kt ist und die obere Grenzgeschwindigkeit gleich 35 kt ist.

14. Verfahren nach einem der Ansprüche 1 bis 13,
    **dadurch gekennzeichnet, dass** das Verfahren einen Schritt (e) der Verhinderung eines Alarms aufweist, der die Signalisierung des Alarms an den Piloten des Drehflügelflugzeugs (20) deaktiviert, wenn das Drehflügelflugzeug (20) in einer Höhe über dem Boden fliegt, welche kleiner oder gleich einer Grenzhöhe ist, oder wenn das Drehflügelflugzeug, welches mindestens zwei Motoren aufweist, in einen Notbetriebsmodus eingetreten ist infolge einer Betriebsstörung eines der Motoren seit einer Zeitdauer, die kleiner als eine vorbestimmte Zeitdauer ist.

15. Verfahren nach Anspruch 14,
    **dadurch gekennzeichnet, dass** die Grenzhöhe zwischen 20 und 100 Fuß (20 bis 100 ft) liegt und die vorbestimmte Zeitdauer gleich 30 s ist.

16. Verfahren nach einem der Ansprüche 1 bis 15,
    **dadurch gekennzeichnet, dass** während des Signalisierungsschrittes Zeitverzögerungen verwendet werden zwischen dem Auslösen des Alarms und der Signalisierung des Auslösens des Alarms an den Piloten des Drehflügelflugzeugs (20) sowie zwischen der Deaktivierung des Alarms und der Signalisierung der Deaktivierung des Alarms an den Piloten.

17. Verfahren nach einem der Ansprüche 1 bis 16,

**dadurch gekennzeichnet, dass** das Drehflügelflugzeug durch drei Vorzugsrichtungen charakterisiert ist, eine Längsrichtung X, die sich vom hinteren Teil des Drehflügelflugzeugs (20) zu dem vorderen Teil des Drehflügelflugzeugs (20) erstreckt, eine Höhenrichtung Z, die sich von unten nach oben senkrecht zu der Längsrichtung X erstreckt, und eine Querrichtung Y, die sich von rechts nach links senkrecht zu der Längsrichtung (X) und der Höhenrichtung (Z) erstreckt, wobei, wenn die Längsrichtung X mit einem Winkel $\theta$ relativ zu einer horizontalen Ebene geneigt ist, die Vorhersage-Vertikalgeschwindigkeit ($V_{ZP}$) durch eine Formel ($V_{ZP}.\cos\theta$) ersetzt wird, die mit dem Schwellenwert der vertikalen Grenzgeschwindigkeit verglichen wird.

18. Verfahren nach einem der Ansprüche 1 bis 17,
    **dadurch gekennzeichnet, dass** während des Rechenschritts die Vorhersage-Vortriebsgeschwindigkeit ($V_{AP}$) gleich der augenblicklichen Vortriebsgeschwindigkeit ($V_A$) des Drehflügelflugzeugs (20) ist und die Vorhersage-Vertikalgeschwindigkeit ($V_{ZP}$) gleich der augenblicklichen vertikalen Geschwindigkeit ($V_Z$) des Drehflügelflugzeugs (20) ist, um während des Schrittes des Auslösens eines Alarms zu bestimmen, ob sich das Drehflügelflugzeug (20) in einem Wirbelbereich zu einem aktuellen Zeitpunkt (t) befindet.

19. Verfahren nach einem der Ansprüche 1 bis 18,
    **dadurch gekennzeichnet, dass** die augenblickliche Vortriebsgeschwindigkeit ($V_A$) und die Vorhersage-Vortriebsgeschwindigkeit ($V_{AP}$) des Drehflügelflugzeugs (20) jeweils gebildet werden durch eine augenblickliche Eigengeschwindigkeit ($V_P$) und eine Vorhersage-Eigengeschwindigkeit ($V_{PP}$) des Drehflügelflugzeugs (20).

20. Verfahren nach einem der Ansprüche 1 bis 18,
    **dadurch gekennzeichnet, dass** die augenblickliche Vortriebsgeschwindigkeit ($V_A$) und die Vorhersage-Vortriebsgeschwindigkeit ($V_{AP}$) des Drehflügelflugzeugs (20) jeweils gebildet werden durch eine horizontale Komponente einer augenblicklichen Eigengeschwindigkeit ($V_P$) und eine horizontale Komponente einer Vorhersage-Eigengeschwindigkeit ($V_{PP}$) des Drehflügelflugzeugs (20).

21. Vorrichtung (10) zur Erfassung und Signalisierung der Annäherung eines Drehflügelflugzeugs (20) an einen Wirbelbereich, wobei das Drehflügelflugzeug (20) einer Drehflügelflugzeugfamilie angehört, wobei das Drehflügelflugzeug (20) einen Hauptrotor (21) mit Rotorblättern (22) aufweist, wobei die Vorrichtung (10) aufweist:

    - eine erste Messvorrichtung (1) zum Messen einer augenblicklichen vertikalen Geschwindigkeit ($V_Z$) des Drehflügelflugzeugs (20),
    - eine zweite Messvorrichtung (2) zum Messen einer konventionellen Geschwindigkeit ($V_C$) des Drehflügelflugzeugs (20),
    - eine Speichervorrichtung (3), die einen Schwellenwert der Grenzvortriebsgeschwindigkeit und einen Schwellenwert der vertikalen Grenzgeschwindigkeit enthält, die eine Grenze des Eintritts in einen Wirbelbereich für die Drehflügelflugzeugfamilie des Drehflügelflugzeugs (20) definiert,
    - eine Rechenvorrichtung (4), die mit der ersten und der zweiten Messvorrichtung (1, 2) und der Speichervorrichtung (3) verbunden ist, wobei die Rechenvorrichtung (4) dazu bestimmt ist, eine augenblickliche Vortriebsgeschwindigkeit ($V_A$), eine augenblickliche vertikale Beschleunigung $\left(\frac{dV_Z}{dt}\right)$ und eine augenblickliche Vortriebsbeschleunigung $\left(\frac{dV_A}{dt}\right)$ des Drehflügelflugzeugs (20) zu berechnen und die Annäherung an einen Wirbelbereich durch das Drehflügelflugzeug (20) zu erfassen, und
    - eine Signalisierungsvorrichtung (5), die die Annäherung an einen Wirbelbereich durch das Drehflügelflugzeug (20) signalisiert, wobei die Signalisierungsvorrichtung mit der Rechenvorrichtung (4) verbunden ist,

    **dadurch gekennzeichnet, dass** die Vorrichtung (10) das Verfahren nach einem der Ansprüche 1 bis 20 ausführt.

**Claims**

1. Method for detecting and signaling that a rotorcraft (20) is approaching a vortex domain, said rotorcraft (20) belonging to a class of rotorcraft and comprising a main rotor (21) that is provided with blades (22),
   **characterized in that** said method comprises the following steps:

   a) a preliminary step of determining a forward speed limit threshold and a vertical speed limit threshold defining a limit for entering a vortex domain for said class of rotorcraft,

b) a step of calculating, in real time, a predictive forward speed ($V_{AP}$) and a predictive vertical speed ($V_{ZP}$) of said rotorcraft (20) during a flight of said rotorcraft (20),

- said predictive forward speed ($V_{AP}$) being calculated on the basis of an instantaneous forward speed ($V_A$) and an instantaneous forward acceleration $\left(\frac{dV_A}{dt}\right)$ of said rotorcraft (20) at a prediction time interval $\Delta t$ that characterizes the prediction time of said predictive forward speed ($V_{AP}$) and of said predictive vertical speed ($V_{ZP}$),

- said predictive vertical speed ($V_{ZP}$) being calculated according to said instantaneous forward speed ($V_A$),

• when said instantaneous forward speed ($V_A$) is greater than a maximum speed limit, said predictive vertical speed ($V_{ZP}$) being calculated on the basis of the instantaneous vertical speed ($V_Z$) of said rotorcraft (20), the energy balance of said rotorcraft (20) and the variation in the power required by said main rotor (21) for a level flight at said prediction time interval $\Delta t$, and

• when said instantaneous forward speed ($V_A$) is less than a minimum speed limit, said predictive vertical speed ($V_{ZP}$) being calculated on the basis of said instantaneous vertical speed ($V_Z$) and an instantaneous vertical acceleration $\left(\frac{dV_Z}{dt}\right)$ of said rotorcraft (20)

c) a step of triggering an alarm that indicates that a rotorcraft (20) is approaching a vortex domain, said predictive forward speed ($V_{AP}$) and said predictive vertical speed ($V_{ZP}$) being compared with said forward speed limit threshold and said vertical speed limit threshold, respectively, said alarm being triggered when said predictive forward speed ($V_{AP}$) has reached said forward speed limit threshold and said predictive vertical speed ($V_{ZP}$) has reached said vertical speed limit threshold, and

d) a step of signaling said alarm to a pilot of said rotorcraft (20) following the triggering of said alarm.

2. Method according to claim 1, **characterized in that**, when said instantaneous forward speed ($V_A$) is less than or equal to said maximum speed limit and greater than or equal to said minimum speed limit, said predictive vertical speed ($V_{ZP}$) is an interpolation between the two previous cases, i.e. when said instantaneous forward speed ($V_A$) is greater than said maximum speed limit and when said instantaneous forward speed ($V_A$) is less than said minimum speed limit.

3. Method according to claim 1, **characterized in that**, when said instantaneous forward speed ($V_A$) is less than or equal to said maximum speed limit and greater than or equal to said minimum speed limit, said predictive vertical speed ($V_{ZP}$) is calculated between the two previous cases using hysteretic logic, i.e. when said instantaneous forward speed ($V_A$) decreases to below said maximum speed limit and remains greater than or equal to said minimum speed limit, said predictive vertical speed ($V_{ZP}$) is calculated according to the first case, i.e. on the basis of said instantaneous vertical speed ($V_Z$), said energy balance of said rotorcraft (20) and said variation of the power required by said main rotor (21) for a level flight at said prediction time interval ($\Delta t$), and when said instantaneous forward speed ($V_A$) increases to above said minimum speed limit and remains less than or equal to said maximum speed limit, said predictive vertical speed ($V_{ZP}$) is calculated according to the second case, i.e. on the basis of said instantaneous vertical speed ($V_Z$) and said instantaneous vertical acceleration $\left(\frac{dV_Z}{dt}\right)$ of said rotorcraft (20).

4. Method according to any of claims 1 to 3, **characterized in that** said calculating step includes the following sub-steps:

b1) a sub-step of determining said instantaneous forward speed ($V_A$) and said instantaneous vertical speed ($V_Z$) of said rotorcraft (20),

b2) a first sub-step of calculating said predictive forward speed ($V_{AP}$) using a first equation

$$V_{AP} = V_A + \Delta t . \frac{dV_A}{dt}$$ , where $t$ and $\Delta t$ denote the time and said prediction time interval, respectively, $\left(\frac{dV_A}{dt}\right)$ being an instantaneous forward acceleration of said rotorcraft (20),

b3) a second sub-step of calculating said predictive vertical speed ($V_{ZP}$) according to said instantaneous forward speed ($V_A$),

- said predictive vertical speed ($V_{ZP}$) being calculated using a second equation

$$V_{ZP} = V_Z + A.\left|V_A.\frac{dV_A}{dt}\right| + B.(V_Z + k).\frac{V_{AP}-V_A}{2.V_y-V_{AP}}$$ when said instantaneous forward speed ($V_A$) is greater than said maximum speed limit, $k$ being a constant characteristic of said rotorcraft class of said rotorcraft (20), $A$ being a first weighting factor, $B$ being a second weighting factor and $V_y$ being a predetermined minimum-power speed of said class of said rotorcraft (20), the expression $B.(V_Z + k).\frac{V_{AP}-V_A}{2.V_y-V_{AP}}$ being applicable for calculating said predictive vertical speed ($V_{ZP}$) only when said rotorcraft (20) is flying at a low instantaneous forward speed ($V_A$) that is less than said predetermined minimum-power speed ($V_y$) of said class of said rotorcraft (20) but is always greater than said maximum speed limit, and at a decreasing instantaneous forward speed ($V_A$) that characterizes a deceleration of said rotorcraft (20),

- said predictive vertical speed ($V_{ZP}$) being calculated by a third equation $V_{ZP} = V_Z + D.\Delta t.\frac{dV_Z}{dt}$ when said instantaneous forward speed ($V_A$) is less than said minimum speed limit, D being a third weighting factor, and $\left(\frac{dV_Z}{dt}\right)$ being an instantaneous vertical acceleration of said rotorcraft (20).

5. Method according to claim 4, **characterized in that** said constant characteristic $k$ is 4000 ft/mn, said first weighting factor $A$ is -0.05, said second weighting factor $B$ is 1 when $V_A \leq V_y$ and 0 when $V_A > V_y$, and said third weighting factor $D$ is 0.5.

6. Method according to any of claims 1 to 5, **characterized in that** said forward speed limit threshold and said vertical speed limit threshold are represented by a vortex domain curve in a graph in which the x-coordinates and the y-coordinates correspond to said instantaneous forward speed ($V_A$) and said instantaneous vertical speed ($V_Z$), respectively, of said rotorcraft (20), said vortex domain curve being representative of a vortex ring state of said class of said rotorcraft (20) and determined based on measurements previously taken from a reference rotorcraft from said class of rotorcraft during flight, and, during said step of triggering an alarm, said alarm is triggered when said predictive forward speed ($V_{AP}$) and said predictive vertical speed ($V_{ZP}$) form a predictive operating point of said rotorcraft (20) located on, or underneath, said vortex domain curve, said alarm being deactivated as soon as said predictive forward speed ($V_{AP}$) and said predictive vertical speed ($V_{ZP}$) form a predictive operating point located above said vortex domain curve.

7. Method according to any of claims 1 to 5, **characterized in that** said forward speed limit threshold is a forward speed limit, and said vertical speed limit threshold is a vertical speed limit, and, during said step of triggering an alarm, said alarm is triggered when said predictive forward speed ($V_{AP}$) is less than or equal to said forward speed limit and said predictive vertical speed ($V_{ZP}$) is less than or equal to said vertical speed limit, said alarm being deactivated as soon as said predictive forward speed ($V_{AP}$) is greater than said forward speed limit, or when said predictive vertical speed ($V_{ZP}$) is greater than said vertical speed limit.

8. Method according to claim 7, **characterized in that** said vertical speed limit corresponds to half of an average value of the speed induced by said main rotor (21) when said rotorcraft (20) hovers out of ground effect.

9. Method according to either claim 7 or claim 8, **characterized in that** said forward speed limit is 25 kt and said vertical speed limit is -1200 ft/mn.

10. Method according to any of claims 1 to 9, **characterized in that** said forward speed threshold is a first hysteretic threshold composed of a first forward speed limit and a second forward speed limit, said first forward speed limit being less than said second forward speed limit, said vertical speed limit threshold is a second hysteretic threshold composed of a first vertical speed limit and a second vertical speed limit, said first vertical speed limit being less than said second vertical speed limit and, during said step of triggering an alarm that indicates that a rotorcraft (20) is approaching a vortex domain, said alarm is triggered when said predictive forward speed ($V_{AP}$) is less than or equal to said first forward speed limit and said predictive vertical speed ($V_{ZP}$) is less than or equal to said first vertical speed limit, said alarm being deactivated as soon as said predictive forward speed ($V_{AP}$) is greater than second forward speed limit, or when said predictive vertical speed ($V_{ZP}$) is greater than said second vertical speed limit.

11. Method according to claim 10, **characterized in that** one of said first and second vertical speed limits corresponds to half of an average value of the speed induced by said main rotor (21) when said rotorcraft (20) hovers out of ground effect.

12. Method according to either claim 10 or claim 11, **characterized in that** said first forward speed limit is 21 kt, said second forward speed limit is 26 kt, said first vertical speed limit is -800 ft/mn and said second vertical speed limit is -1200 ft/mn.

13. Method according to any of claims 1 to 12, **characterized in that** said lower speed limit is 15 kt and said upper speed limit is 35 kt.

14. Method according to any of claims 1 to 13, **characterized in that** said method comprises a step of muting (e) the alarm which deactivates the signaling of said alarm to the pilot of said rotorcraft (20) when said rotorcraft (20) is moving at a height with respect to the ground that is less than or equal to a height limit, or when said rotorcraft, which comprises at least two engines, has entered an emergency operation mode following a malfunction of one of said engines for a period of time that is less than a predetermined period of time.

15. Method according to claim 14, **characterized in that** said height limit is between 20 and 100 feet (20 to 100 ft) and said predetermined period of time is 30 s.

16. Method according to any of claims 1 to 15, **characterized in that**, during said signaling step, there are time delays between the triggering of said alarm and the signaling of the triggering of said alarm to the pilot of said rotorcraft (20), and also between the deactivating of said alarm and the signaling of the deactivating of said alarm to said pilot.

17. Method according to any of claims 1 to 16, **characterized in that**, said rotorcraft having three primary directions, namely a longitudinal direction X extending from behind said rotorcraft (20) toward the front of said rotorcraft (20), an elevation direction Z extending upwards from below perpendicularly to said longitudinal direction X and a transverse direction Y extending from right to left perpendicularly to said longitudinal direction X and said elevation direction Z, when said longitudinal direction X is inclined at an angle $\theta$ with respect to a horizontal plane, said predictive vertical speed ($V_{ZP}$) is replaced by a formula ($V_{ZP}.\cos\theta$) that is compared with said vertical speed limit threshold.

18. Method according to any of claims 1 to 17, **characterized in that**, during said calculating step, said predictive forward speed ($V_{AP}$) is equal to said instantaneous forward speed ($V_A$) of said rotorcraft (20), and said predictive vertical speed ($V_{ZP}$) is equal to said instantaneous vertical speed ($V_Z$) of said rotorcraft (20), so as to determine whether said rotorcraft (20) is in a vortex domain at the current moment t during said step of triggering an alarm .

19. Method according to any of claims 1 to 18, **characterized in that** said instantaneous forward speed ($V_A$) and said predictive forward speed ($V_{AP}$) of said rotorcraft (20) are an instantaneous airspeed ($V_P$) and a predictive airspeed ($V_{PP}$), respectively, of said rotorcraft (20).

20. Method according to any of claims 1 to 18, **characterized in that** said instantaneous forward speed ($V_A$) and said predictive forward speed ($V_{AP}$) of said rotorcraft (20) are a horizontal component of an instantaneous airspeed ($V_P$) and a horizontal component of a predictive airspeed ($V_{PP}$), respectively, of said rotorcraft (20).

21. Device (10) for detecting and signaling that a rotorcraft (20) is approaching a vortex domain, said rotorcraft (20) belonging to a class of rotorcraft, said rotorcraft (20) comprising a main rotor (21) that is provided with blades (22), said device (10) comprising:

- a first measuring means (1) for measuring an instantaneous vertical speed ($V_Z$) of said rotorcraft (20),
- a second measuring means (2) for measuring a conventional speed ($V_C$) of the rotorcraft (20),
- a memory (3) containing a forward speed limit threshold and a vertical speed limit threshold defining a limit for entering a vortex domain for said class of rotorcraft of said rotorcraft (20),

- a calculating means (4) connected to the first and second measuring means (1, 2) and to said memory (3), said calculating means (4) being intended for calculating an instantaneous forward speed ($V_A$), an instantaneous

EP 3 263 452 B1

vertical acceleration $\left(\frac{dV_Z}{dt}\right)$ and an instantaneous forward acceleration $\left(\frac{dV_A}{dt}\right)$ of the rotorcraft (20) and for detecting that said rotorcraft (20) is approaching a vortex domain, and
- a signaling means (5) that signals that said rotorcraft (20) is approaching a vortex domain, said signaling means (5) being connected to said calculating means (4),

**characterized in that** said device (10) implements said method according to any of claims 1 to 20.

EP 3 263 452 B1

Fig.1

Fig.2

Fig.3

Fig.4

Fig.5

Fig.6

Fig.7

Fig.8

**EP 3 263 452 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1950718 A
- FR 2921635
- EP 2513732 A
- US 20110295568 A
- FR 2978586
- WO 2004101358 A
- FR 2921728